# EUROPÄISCHE PATENTSCHRIFT

(11) **EP 2 903 422 B1**
(45) Veröffentlichungstag und Bekanntmachung des Hinweises auf die Patenterteilung: **10.03.2021**
(21) Anmeldenummer: 13771135.4
(22) Anmeldetag: 30.09.2013
(51) Int. Cl.: A01K 1/03, G06Q 10/08, A01G 7/00

(54) **VERFAHREN UND VORRICHTUNG ZUR ORGANISATION WENIGSTENS EINES OBJEKTS**
METHOD AND DEVICE FOR ORGANISING AT LEAST ONE OBJECT
PROCÉDÉ ET DISPOSITIF POUR L'ORGANISATION D'AU MOINS UN OBJET

(30) Priorität: 01.10.2012 DE 102012109320; 17.10.2012 DE 102012109907; 26.10.2012 DE 102012110291
(43) Veröffentlichungstag der Anmeldung: 12.08.2015
(73) Patentinhaber: Hammelbacher, Stephan, 83684 Tegernsee (DE)
(72) Erfinder: Hammelbacher, Stephan, 83684 Tegernsee (DE)
(74) Vertreter: Beckord & Niedlich Patentanwälte PartG mbB
(86) Internationale Anmeldenummer: PCT/EP2013/070329
(87) Internationale Veröffentlichungsnummer: WO 2014/053436

(56) Entgegenhaltungen:
- WO-A2-2006/069347
- US-A1- 2006 071 773
- US-A1- 2009 293 815
- US-A1- 2010 121 480

## Beschreibung

Die Erfindung betrifft eine Vorrichtung, insbesondere für eine Tierraumeinrichtung oder eine Pflanzenlaboreinrichtung, die geeignet ist zur Durchführung eines Verfahrens zur Organisation wenigstens eines Objekts, mit einem Regal bzw. einer Käfiganordnung (rack) mit einer Bedienungsseite, mit Behältern bzw. Käfigen (cages), die leer sein oder zumindest ein Objekt enthalten können, mit einer Vorrichtung zum Erfassen der Behälter im Regal und mit einer Recheneinheit zum Speichern und Verarbeiten von Daten. Die Organisation eines oder mehrerer Objekte kann eine Prozessverfolgung von Vorgängen und/oder Leistungen, die wenigstens ein Objekt betreffen, und/oder die Feststellung der Präsenz eines Objektes betreffen, wobei auch der Behälter selbst das Objekt sein kann. Die Organisation des Objekts demzufolge mittelbar über die Organisation seines Behälters geschehen, insbesondere, wenn sich das Objekt für eine unmittelbare Organisation nicht eignet. Die Bedienungsseite ist regelmäßig eine Frontseite des Regals, von der aus die Entnahme von Behältern und das Beschicken mit ihnen erfolgt. Mit dem Erfassen der Behälter wird ihre Anwesenheit oder Abwesenheit im Regal erfasst, bzw. ihre Anwesenheit an einer bestimmten Position erfasst.

Die WO 2011/124 209 beschreibt ein Verfahren zur Prozessverfolgung von Vorgängen und/oder von Leistungen, die wenigstens ein Objekt betreffen, bei dem ein Lesegerät Daten bzw. Attribute eines dem Objekt oder seinem Behälter zugeordneten Datenträgers erfasst, wobei die Daten das Objekt beschreiben, mit den Schritten Identifizieren des Objekts durch Erfassen der Daten des Datenträgers durch das Lesegerät und Erfassen eines Vorgangs bzw. einer Leistung und/oder der dadurch gewonnenen Daten des Objekts, wobei zwischen den beiden Schritten in Abhängigkeit der erfassten Daten eine Auswahl von Vorgängen und/oder Leistungen aus einer Mehrzahl getroffen wird, und die Auswahl einer Bedienperson zur Durchführung angeboten wird. Außerdem werden ein Computerprogrammprodukt zur programmtechnischen Einrichtung eines Computersystems und eine Wechselstation zur Durchführung des Verfahrens beschrieben.

Die US 2006/0071773 beschreibt eine Fernsensorbaugruppe, die ein Siliziumsubstrat, eine Vielzahl von mikroelektromechanischen Systemen (MEMS), unterstützt durch das Siliziumsubstrat, eine auf dem Siliziumsubstrat getragene drahtlose Kommunikationsschaltung und eine auf dem Siliziumsubstrat getragene Verarbeitungseinrichtung umfasst.
Die US 2010/0121480 beschreibt ein Verfahren zur visuellen technischen Unterstützung von manuellen Kommissionsvorgängen durch eine Vorrichtung mit zumindest einer mobilen Einheit, aufweisend eine optosensorische Erfassungseinrichtung, eine optische Anzeigevorrichtung, eine Datenverarbeitungseinrichtung und eine Datenschnittstelle zur kabellosen Verbindung mit einer stationären EDV-Anlage, welche neben einer Warenmanagement-Software eine Verbindungseinrichtung für alle aktiven mobilen Einheiten aufweist.

Die US 2009/0293815 betrifft einen integrierten RFID-Kartenhalter, einen Käfig, einen Deckel oder eine Haltevorrichtung und ein System zur Erfassung, Inventarisierung und Verfolgung der Käfige, der Deckel, der Kartenhalter und der Haltevorrichtungen.

Die WO2006/069347 beschreibt allgemein die Handhabung von Tierkäfigen in Biosicherheitslaboren ("BSL"), z. B. BSL mit Schutzstufen 3 und 4. Ein Tierlager für solche Einrichtungen umfasst ein Käfig-Automatisierungssystem (CLAS), das an die Speicherung und den Abruf für Tierkäfige angepasst ist, welche eine freistehende Hängeregalvorrichtung umfasst, ein oder mehrere Tierkäfige, ein Tierkäfig-Rack, das zum Einschieben in die Hängeregalvorrichtung geeignet ist und zur gezielten Suche und Speicherung der Tierkäfige ausgelegt ist, ein Rackmotor, der in Verbindung mit dem Tierkäfig-Rack wirksam ist, ein Roboterarm, der für den Transport des Tierkäfigs von dem Tierkäfig-Rack zuständig ist und einen Halteraum hat, einen Endeffektor, der an einem Ende des Roboterarms angeordnet ist und zur Manipulation des Tierkäfigs ausgelegt ist, und eine Steuereinrichtung betriebsmäßig in Verbindung mit dem Rackmotor und dem Roboterarm, und einen Wartebereich, der für eine Warteschlange aus Käfigen ausgelegt ist, die eine vorbestimmte Anzahl von Tierkäfigen enthält.

Aufgabe der Erfindung ist es, Verfahren zur Durchführung der Prozessverfolgung von Vorgängen oder Leistungen in einer Tierraumeinrichtung, einer Pflanzenlaboreinrichtung und dergleichen zuverlässiger und weniger fehleranfällig zu gestalten.

Diese Aufgabe wird bei einer eingangsgenannten Vorrichtung dadurch gelöst, wie definiert bei Anspruch 1, dass die Erfassungseinrichtung dazu eingerichtet und ausgebildet ist, den Ort eines Behälters oder mehrere Behälter im Regal konkret zu erfassen. Der Einfachheit halber wird die Erfindung im Folgenden hauptsächlich anhand eines Behälters in einem Regal einer Tierraumeinrichtung erläutert, wobei sie selbstverständlich auch auf mehrere Behälter und mehrere Regale anderer Einrichtungen und auch für andere Einsatzzwecke, wobei man durchaus auch nach der Größe der Regale und der Behälter unterscheidet, anwendbar ist. Zum Beispiel Einrichtungen mit sehr kleinen Racks und Behältern wie beispielsweise Labors mit Gewebs-/Zell-/ Blutproben oder Insekten und Pflanzenlaboreinrichtungen für Samen und Keimlinge oder Einrichtungen mit größeren Regalen und Behältern wie zum Beispiel in Krankenhäuser mit Patienten als "Objekten" in Patientenbetten-/-fächern als "Behältern" und Räumen als "Regalen" und, für die Industrie und Handels,- Logistik mit Kommissionierhallen mit Regalen und Hochregallagern oder in Nahrungsmittelindustrie mit Regalen, in denen Reifeprozesse kontrolliert werden. Erfindungsgemäß wird also nicht nur die grundsätzliche Anwesenheit oder Abwesenheit eines Behälters in dem Regal detektiert, unabhängig davon, an welcher Stelle im Regal er sich befindet, sondern seine konkrete Position im Regal bzw. sein Fach (slot), in dem er sich befindet oder befinden soll. Dadurch können z.B. durch Unaufmerksamkeit eines Benutzers auf den Käfigkarten der Behälter angegebenen Regalpositionen, die nicht der tatsächlichen Position des Behälters im Regal entsprechen, erkannt und signalisiert werden. Werden Behälter und ihre zugehörigen Plätze im Regal nicht mehr unbemerkt vertauscht, können bei einer nachfolgenden Bearbeitung keine falschen Objekte mehr verarbeitet und die Daten nicht mehr falsch zugeordnet werden, ohne dass eine Fehlermeldung ausgegeben wird. Dies ist insbesondere auch dann wichtig, wenn die Objekte so klein sind, dass man sie nicht mehr selbst, sondern nur ihre Behälter markieren kann, in denen sie platziert sind und die Planung von Transaktion für diese Objekte nur auf der Basis passieren kann, dass die Objekte einen ganz bestimmten Platz in einem Rack haben. Erfindungsgemäß wird nämlich ein Regal nicht bereits dann als vollständig und korrekt bestückt angesehen, wenn alle Behälter vorhanden sind. Die Erfindung sorgt vielmehr dafür, dass erst dann ein gewünschter Zustand erreicht und signalisiert wird, wenn jeder Behälter auf seinem vorgesehenen Platz im Regal positioniert ist. Damit erhalten auch die Daten der zugehörigen Datenbank eine höhere Qualität und Zuverlässigkeit. Beispielsweise wird ein Vertauschen zweier Behälter, die demselben Regal zugeordnet sind, erfindungsgemäß detektiert und gegebenenfalls signalisiert. Damit kann das korrekte Beschicken des Regals mit Behältern nach deren Entnahme zuverlässig überprüft werden, so dass beispielsweise ein versehentliches Vertauschen zweier Behälter zumindest frühzeitig erkannt werden kann.

Eine geeignete Vorrichtung gemäß der Erfindung kann beispielsweise bei größeren Objekten auf dem mechanischen Prinzip beruhen, dass jedem Behälter in seinem Regalfach ein Gegenstück nach dem Schlüssel-Schlossprinzip zugeordnet ist. Ein Behälter kann folglich nur dann korrekt im Regal positioniert werden, wenn er auf sein Gegenstück im Regalfach passt. Dazu kann beispielsweise eine Stecker-Steckdosen-Anordnung dienen. Allerdings können derartige Systeme unflexibel für Positionsänderungen der Behälter sein, weil dann jeder Käfig auf ein bestimmtes Regalfach festgelegt ist. Nach einer vorteilhaften Ausgestaltung der Erfindung kann der Behälter berührungslos erfassbar sein. Damit können mechanische Elemente, die auf Berührkontakt beruhen, aber auch Schalter- oder Tastersysteme, entfallen. Denn derartige Erkennungssysteme erfordern in der Regel einen relativ hohen Installationsaufwand. Eine berührungslos arbeitende Erfassungseinrichtung dagegen kann in aller Regel einfach und dazu sehr robust ausgeführt sein, die Bedienung des Regals nicht einschränken und unanfällig gegenüber Ausfall sein. So können beispielsweise Lichtschranken, die vor dem Regal montiert sind, eine Positionserkennung ermöglichen, welcher Behälter manipuliert wurde bzw. wird. Dafür genügt bei einem rechteckigen Regal bzw. bei einem rechteckigen Umriss der Bedienungsseite des Regals eine waagrecht und eine senkrecht wirkende Lichtschranke, um eine genaue Position eines Behälters bestimmen zu können, der beispielsweise entnommen wird. Alternativ kann an jedem Regalfach und jedem Behälter zugeordnet jeweils ein Stichcodeleser angebracht sein, der einen Strichcode am Behälter und damit den Behälter erfasst, sobald er dem Fach entnommen oder in das Fach zurückgestellt wird. Eine berührungslos arbeitende Erfassungsvorrichtung bietet zudem den Vorteil, dass sie stationär in einem Raum und mehreren Regalen zugeordnet sein kann, wobei die zu überprüfenden Regale in ihren Erfassungsbereich verbracht, beispielsweise verfahren werden können. Alternativ dazu kann eine Erfassungseinrichtung für mehrere stationäre Regale mobil angeordnet sein und zum Erfassungsvorgang auf das zu betrachtende Regal gerichtet werden. In beiden Fällen ermöglicht eine berührungslos arbeitende Erfassungseinrichtung, dass sie mehrere Regale erfassen kann, also nicht für jedes Regal eine eigene Erfassungseinrichtung erforderlich ist. Dadurch lassen sich erhebliche Kosten für die Erfassungseinrichtung einsparen.

Wo mechanische Erfassungseinrichtungen nach dem Schlüssel-Schlossprinzip zu unflexibel sind, können Lichtschrankensysteme beispielsweise bei einer gleichzeitigen Betätigung zweier Behälter zu ungenau und individuelle Strichcodeleser für jeden Behälter zu aufwändig sein. Behälter tragen regelmäßig Identifikationseinrichtungen, zum Beispiel Käfigkarten, auf denen Daten des Behälters abgelegt sind. Daten des Behälters können sowohl ihn selbst betreffen, beispielsweise seine Position im Regal, aber auch Daten seines Inhalts umfassen, beispielsweise Stamm, Geschlecht und Alter eines Versuchstieres. Die Identifikationseinrichtung kann gegebenenfalls mit einem elektronischen Speicherchip als zusätzlichem Datenträger für diese und ggf. weitere Daten kombiniert sein. Nach einer weiteren vorteilhaften Ausgestaltung der Erfindung, kann die Identifikationseinrichtung per Funk erfassbar sein. Am Behälter bzw. seiner Identifikationseinrichtung kann also ein Sender, beispielsweise ein aktiver oder passiver Transponder, angebracht sein, der beispielsweise HF-, UHF-, IR- oder UHF-RFID-Technologie zur Identifizierung nutzt. Die Erfassungseinrichtung umfasst demzufolge einen dementsprechenden Empfänger, mit dem der Sender am Behälter erfasst werden kann. Beispielsweise durch Abfahren des Regals mit Richtantennen kann jeder einzelne Behälter separat und mit Bezug auf seinen Standort erfasst und damit das Regal auf Vollständigkeit und richtige Positionierung seiner Behälter überprüft werden.

Nach der Erfindung umfasst jeder Behälter eine Positionsmarkierung, die als Datamatrix-Code oder Braille-Code oder sogar in Klarschrift auf dem Behälter abgelegt ist und das zugehörige Fach des Regals bezeichnet. Die Erfassungseinrichtung kann das gesamte Regal oder Ausschnitte zum Beispiel seiner Bedienseite und damit auch jeden einzelnen Behälter, bis hin zu seiner Positionsmarkierung optisch erfassen. Diese Variante der berührungslosen Erfassung erfordert keinen separaten Sender, sondern erfasst im Wesentlichen vorhandene Identifikationseinrichtungen, beispielsweise ein Aufdruck auf dem Behälter selbst oder auf einer Käfigkarte oder auf dem Käfigkartenhalter. Die Erfassungseinrichtung kann jedenfalls das ganze Regal und/oder jeden einzelnen Behälter optisch aufnehmen. Das aufgenommene Bild des oder der Behälter kann dann mit einer Aufnahme verglichen werden, die einen Zielzustand zeigt. Die Erfassungseinrichtung kann vorteilhafterweise mit einer geeigneten Datenverarbeitungseinrichtung verbunden sein, die eine Analysesoftware mit Bilderkennungs- und Vergleichsfunktion bietet. Dadurch kann ein Bild einer aktuellen Erfassung, also ein aktuelles Bild des Regals oder eines Ausschnitts daraus, mit einem Vergleichsbild elektronisch verglichen werden, das den Zielzustand des Regals bzw. der Behälterpositionierung zeigt. Abweichungen werden dann einem Benutzer der Vorrichtung nach einer Bildanalyse signalisiert.

Vorzugsweise werden nicht nur die Anwesenheit oder Abwesenheit eines Behälters erfasst, sondern ggf. auch Daten z.B. die Position, die er zum Beispiel als Klartext, als Barcode oder als Data-Matrix-Code trägt. Die Daten können anschließend auf Übereinstimmung mit den zugehörigen in der Datenbank hinterlegten Daten überprüft und entsprechend signalisiert werden.

Als optische Erfassungseinrichtung eignen sich beispielsweise Kameras, die auf Schienen verfahrbar oder stationär angebracht und ggf. schwenkbar auf das Regal gerichtet sind und/oder nach Anwahl des Regals über eine Software auf dasselbe gerichtet/geschwenkt werden können. Alternativ kann sie auf dem Kopf des Benutzers oder als Datenbrille getragen werden, also als ein am Kopf getragener Miniaturcomputer, der auf einem Brillenrahmen montiert ist, Informationen in das Sichtfeld des Benutzers einblendet (sog. Head-Up-Display), diese Informationen mit einem aufgenommenen Bild kombiniert, das eine in Blickrichtung des Benutzers integrierte Digitalkamera live liefert und dazu extern Daten beispielsweise aus dem Internet oder von einer Datenbank unmittelbar bezieht und/oder dorthin versendet und Spracheingaben des Benutzers verarbeiten kann (z.B. Google Glass®). Sie kann funktional oder konstruktiv jedem Regal separat zugeordnet oder nach der Erfindung unabhängig von ihm in einem Raum angebracht sein, in dem sich ein Regal oder mehrere Regale befinden. So kann die erfindungsgemäße Erfassungsvorrichtung eine manuelle Auswertung der erfassten Daten bzw. eine Auswertung durch einen Benutzer erübrigen.

Nach einer weiteren vorteilhaften Ausgestaltung der Erfindung kann eine 3D-Kamera als optische Erfassungseinrichtung dienen, die den Behälter und dessen Inhalt erfasst. Bei einem herkömmlichen Regal kann eine geringe Distanz der Erfassungsreinrichtung gegenüber dem einzelnen Behälter für gut auswertbare Aufnahmen günstig sein. Damit kann der Behälterinhalt bzw. das darin enthaltene Objekt, beispielsweise Versuchstiere, zuverlässig erfasst und durch eine entsprechende Analysesoftware ausgewertet werden. Mit der 3D-Kamera kann eine Punkteschar eines Objektes im Behälter erstellt werden. Die Punktescharen haben charakteristische Umrisse, so dass für bekannte Objekte, z.B. Mäuse, ein Skelett in diese Punktescharen "hineinprogrammiert" werden kann. Daran lässt sich nicht nur erkennen, wie viele Tiere im Käfig sind, sondern auch in welchen Stellungen sie sich zueinander befinden bzw. bewegen. Ein derartiges Vorgehen ist heute schon zum Beispiel mit der Kamera KINECT® von MICROSOFT Inc. oder XTION® von Asus Inc. für menschliche Skelette bekannt. Die Erfindung ermöglicht damit eine Objektbeobachtung und deren digitale Auswertung ohne Eingriff eines Menschen. Hierdurch ergeben sich nicht nur neue Analysemöglichkeiten, sondern es reduzieren sich auch potentielle Bedienfehler durch einen Benutzer. Vor allen wird dem Benutzer die Bildauswertung erheblich erleichtert.

Softwaregestützte Erfassungseinrichtungen umfassen regelmäßig eine Umwandlungseinheit, die die erfassten Daten in elektronisch verarbeitete Daten umwandeln, damit sie anschließend in der Rechnereinheit weiterverarbeitet werden können. Die Erfassungseinrichtung umfasst daher vorteilhafterweise eine Datenschnittstelle zur Weiterleitung der Daten an die Rechnereinheit. In der Rechnereinheit oder separat ist eine Vergleichs- bzw. Analyseeinheit untergebracht, in der die Daten mit hinterlegten Daten beispielsweise einer Datenbank mit den Daten des betreffenden Regals und seiner Behälter verglichen bzw. analysiert werden kann. Bei Abweichungen und/oder bei Übereinstimmung mit einem Vergleichsdatensatz kann eine Signalvorrichtung einen Warn- bzw. Bestätigungssignal ausgeben. Das Warnsignal kann zumindest ein elektrischer bzw. ein elektronischer Impuls, vorteilhafterweise aber ein optisch oder akustisch erfassbares Signal sein.

Schließlich kann die Vorrichtung eine Einschaltvorrichtung für ihre Aktivierung umfassen, die entweder herkömmlich in einem weitgehend beliebig ausgestalteten Schalter besteht, der durch eine Benutzerbetätigung bzw. Eingabe bedient wird. Alternativ oder zusätzlich kann die Einschaltvorrichtung weitgehend selbsttätig, beispielsweise durch Erfassung einer Betätigung des Regals bzw. Manipulation eines Behälters ausgelöst werden, also als Erfassungsvorrichtung ausgebildet sein. Sie kann zum Beispiel auf der Erfassung eines Lichtschrankensignals, auf der Erfassung einer Bewegung eines Benutzers vor dem Regal durch einen Bewegungsmelder oder auf einer Ortsver-änderung eines funktechnisch erfassten Behälters oder auf der Erfassung eines gesprochenen Befehls, insbesondere in Verbindung mit einer Datenbrille (z.B. Google Glass®) beruhen. Eine separate Betätigung oder Aktivierung der Erfassungseinrichtung kann damit entfallen, womit der Inhalt des Regals durchgehend überwacht und damit die Daten der zugehörigen Datenbank auch nicht versehentlich manipuliert werden können. Dadurch lassen sich eine hohe Zuverlässigkeit der Datenerfassung und eine hohe Qualität der Daten in der Datenbank sicherstellen. Falls eine Kamera die Behälterentnahme mehrerer Regale in einem Raum unterstützen soll, kann das zu manipulierende Regal in der Software ausgewählt werden. Die Kamera kann sich dann aufgrund der hinterlegten Regalposition im Raum automatisch auf das Regal richten.

Aus der WO 2011/124 209 A2 ist es bekannt, die Behälter mit einem elektronischen Etikett als Identifikationseinrichtung auszustatten. Elektronische Etiketten sind zum Beispiel aus dem Nahrungsmittelhandel, insbesondere aus Großmärkten, als "electronic shelf labels" bekannt und werden im Folgenden als Smartlabels bezeichnet. In ihnen können Daten zum Behälter und seinem Inhalt hinterlegt sein, die zumindest teilweise angezeigt werden. Nach einer weiteren vorteilhaften Ausgestaltung der Erfindung umfasst die Vorrichtung eine Sende- und Empfangsvorrichtung, die mit der Rechnereinheit gekoppelt ist und die für eine Kommunikation mit dem Smartlabel ausgebildet ist. Damit lässt sich die Identifikationseinrichtung des Behälters zur mensch- und/oder maschinenlesbaren Anzeigeeinrichtung ausbauen.

Nach einer weiteren vorteilhaften Ausgestaltung der Erfindung kann die Sende- und Empfangsvorrichtung außerhalb einer Wechselstation, aber innerhalb einer Tierraum-, Pflanzenlaboreinrichtung oder Lagerhalle angebracht sein. Sie muss also nicht auf eine Nahkommunikation mit dem Smartlabel hin ausgebildet sein, sondern kann auch über größere Distanzen mit ihm kommunizieren. Die Erfindung ermöglicht dadurch eine schnelle Erfassung und Überprüfung des Inhalts einzelner Behälter bis hin zum gesamten Regalinhalt, indem sowohl die Anwesenheit eines einzelnen oder mehrerer individueller Behälter überprüft oder das gesamte Regal nach Art einer Inventur erfasst werden kann. Die Kommunikation zwischen der Sende- und Empfangsvorrichtung und dem Smartlabel kann optisch auf der Erfassung eines optischen Codes wie eines Barcodes, QR- oder Data- matrix-Codes oder funktechnisch auf HF-, UHF-, IR- oder WLAN-Technologie oder einer Kombination auch diesen Technologien basieren.

Nach einer weiteren vorteilhaften Ausgestaltung der Erfindung kann eine Sende- und Empfangsvorrichtung in einer behälterverarbeitenden Einrichtung, beispielsweise in einer Wechselstation einer Laboreinrichtung oder in einem Komissionierfahrzeug (Cart, Gabelstapler) einer Lager- bzw. Kommissionierhalle angebracht sein und dort das Smartlabel erfassen bzw. in Abhängigkeit von durchgeführten Vorgängen oder erbrachten Leistungen die Daten des Smartlabels manipulieren. Damit kann der Datensatz des Smartlabels während eines Arbeitsprozesses z.B. auf der Wechselstation aktualisiert werden, ohne dass eine zusätzliche Benutzereingabe und das Ausdrucken und Austauschen von Käfigkarten oder Etiketten erforderlich wäre. Die Erfindung ermöglicht also nicht nur eine schnelle Zuordnung der Daten, die durch auf der Wechselstation vorgenommene Vorgänge oder erbrachte Leistungen geändert wurden, zu einem Behälter, sondern schließt zudem eine Fehlerquelle durch Vertauschen von Käfigkarten und Behältern zuverlässig aus. Dadurch lassen sich wiederum eine hohe Zuverlässigkeit der Datenerfassung und eine hohe Qualität der Datenbank sicherstellen. Weil man das Smartlabel auch auf Distanz "anpingen", also auf seine Anwesenheit und Aktivität hin überprüfen kann (sog. "Wakeup"), kann die Anwesenheit des Behälters elektronisch überprüft werden. Die Erfindung eignet sich daher auch für die Erstellung einer Inventur und kann als Quotient bestehend aus den in der Wechselstation gebuchten Beständen und den durch die Zählung ("anpingen") der tatsächlich vorhandenen Behälter die sogenannte Inventurdifferenz als eine Maßzahl zur Messung der Qualität der Organisation und der Datenbank bezogen auf das zugehörige Regal bzw. die gesamte Einrichtung liefern.

Ein Smartlabel umfasst regelmäßig ein Anzeigefeld bzw. Display zur Wiedergabe von Daten. Je nach Größe des Anzeigefelds können aber nicht immer sämtliche Daten des Behälters und des darin enthaltenen Objekts, die im Speicher des Smartlabels abgelegt sind, wiedergegeben werden. Mit einem sogenannten Accesskey kann aber in den Daten der Anzeige "geblättert" werden. Nach einer weiteren vorteilhaften Ausgestaltung der Erfindung kann auch ein separates mobiles Lesegerät zum Anzeigen zumindest einer Auswahl der Daten des Smartlabels vorgesehen sein. Das mobile Lesegerät kann ein Datensichtgerät oder eine Datenbrille, insbesondere mit Kommunikationseinrichtung z.B. Google Glass®, sein, das alle Daten des Smartlabels oder beispielsweise nur die nicht angezeigten sichtbar macht. Dies kann durch optisches Scannen des Codes mittels Datenbrille (z.B. Google Glass®) und durch Kommunikation mit der Datenbank und Anzeige der Daten in der Brille oder induktiv oder aktiv durch Lesen von LF-, z.B. mit 125 oder 128 KHZ-, mit HF-, z.B. mit 13,56 MHZ-, oder mit UHF-, nämlich mit 800 bis 1200 MHZ-Transpondern und durch Kommunikation mit der Datenbank und Anzeige der Daten in der Brille geschehen oder ausschließlich durch Kommunikation mit dem Smartlabel und dem Sichtbarmachen der darauf gespeicherten Daten. Damit kann ein Benutzer zum Beispiel vor dem Regal stehend die Daten eines Behälters oder seines Inhalts anzeigen, auch wenn auf dem Smartlabel im Falle von RFID nichts oder nur teilweise. z.B. der Code, optisch erkennbar ist. Dadurch können z.B. durch die ausschließliche Verwendung von Codes auf den Smartlabels, sei es in Form von optischen oder elektromagnetisch übertragenen Codes kleinere und damit kostengünstigere Smartlabels eingesetzt werden.

Nach der Erfindung weist jedes Regalfach eine individuelle Kennzeichnung und jeder Behälter eine der Kennzeichnung seines zugehörigen Faches entsprechende Positionsmarkierung auf. In einem einfachen Fall kann das Regal an jedem Fach ein Schild mit der Fachnummer tragen, beispielsweise B4. Der dem Fach zugehörige Behälter trägt als Positionsmarkierung ebenfalls "B4" auf seiner Identifikationseinrichtung. Damit kann ein Benutzer unmittelbar vor dem Regal stehend und durch den Vergleich der Kennzeichnung des Faches, also der Fachnummer, mit der Positionsmarkierung des Behälters dessen Position überprüfen, ohne auf die Datenbank der Rechnereinheit zugreifen zu müssen. Der Vergleich kann dadurch erleichtert werden, dass die Fachnummern einerseits und die Positionsmarkierungen der Behälter andererseits in räumlicher Nähe zueinander angeordnet sind.

Nach einer weiteren vorteilhaften Ausgestaltung der Erfindung kann jeder Behälter des Regals außerhalb einer Käfigkarte oder außerhalb einer Anzeige eines Smartlabels einen individuellen Code umfassen, der vom im Regal abgestellten Behälter herunter herkömmlich und ggf. zusätzlich oder ausschließlich durch die Erfassungseinrichtung maschinenlesbar ist. In einem einfachen Fall kann der Code die Positionsmarkierung des Behälters sein. Maschinenlesbar kann der Code sowohl optisch als auch funktechnisch sein. Als Code ist jede beliebige Zeichenkombination oder Reihe von sonstigen Informationsträgern zu verstehen, die sich entschlüsseln und sich damit in verwertbare, zum Beispiel Zahlen- oder Buchstabeninformationen übertragen lässt. Mit dem Code ausgestattet lässt sich der Behälter separat von seinem Inhalt und ohne Käfigkarte oder sonstige veränderbare Identifikationseinrichtungen individualisieren und getrennt erfassen, auch bezüglich seines Ortes. Der Behälter wird folglich nicht mehr ausschließlich über seinen Standplatz im Regal individualisiert bzw. jener ist ihm nicht mehr zwingend zugeordnet. Gleichwohl bleibt eine korrekte Positionierung des Behälters im Regal hilfreich für die Orientierung des Benutzers. Die Information über die korrekte Behälterlokation innerhalb des Regals braucht aber nicht auf der Käfigkarte oder dem Smartlabel wiedergegeben zu sein, durch deren Verwechslung es zu einer falschen Zuordnung oder durch deren Verlust es zum Verlust der Zuordnung zum entsprechenden Datensatz in der Datenbank kommen kann. Die Identifikationseinrichtung, insbesondere die Anzeige des Behälters wird vielmehr entlastet, womit sie bzw. ihr Anzeigebereich kleiner ausfallen kann. Dadurch lässt sich Material einsparen. Insbesondere lassen sich dadurch kleinere Smartlabels einsetzen, die erheblich kostengünstiger sind als größere. Erfindungsgemäß vereinfacht sich die Bedienung und Pflege des Regals bzw. seiner Behälter und der darin enthaltenen Objekte dadurch, weil eine Verwechselung einer Behälterposition maschinell erfasst und sofort behoben werden kann. Kleinere Smartlabels erleichtern zudem die Sicht auf die Objekte im Behälter deutlich. Dies ist z.B. wichtig, wenn Objekte im Behälter beobachtet werden sollen.

Grundsätzlich kann der Code auf beliebige Weise am Behälter angebracht sein. Nach einer weiteren vorteilhaften Ausgestaltung der Erfindung kann der Code dauerhaft oder reversibel am Behälter befestigt sein. Je nach Einsatzzweck kann der Behälter selbst den individuellen Code tragen. Trägt ihn der Behälter selbst oder ein beliebiger untrennbarer Bestandteil des Behälters, ist er jenem eindeutig zugeordnet und kann nicht mehr vom Behälter getrennt werden. Alternativ oder zusätzlich kann ein beliebiger Bestandteil oder ein beliebiges Anbauteil des Behälters den Code tragen, der bzw. das vom Behälter trennbar ist. So kann beispielsweise ein Kartenhalter oder ein Behälterdeckel oder ein Behälterdeckel mit angebrachtem Kartenhalter mit dem Code markiert sein, der sich vom Behälter abnehmen lässt. Dadurch kann die Zuordnung des Codes des Behälters durch Austausch des Kartenhalters oder des Deckels grundsätzlich verändert werden, was eine gewisse Flexibilität im Einsatz des Behälters bedeutet. Eine derartige Maßnahme geschieht aber im Allgemeinen nicht unbewusst oder versehentlich, so dass aufgrund einer geringen Gefahr von Fehlbedienungen die Qualität der zugehörigen Datenbank nicht negativ beeinträchtigt wird. Auch weitere Bestandteile des Behälters oder seiner Anbauteile sind als alternativer oder zusätzlicher Ort bzw. Träger des Codes denkbar, beispielsweise ein separater Adapter zur Befestigung des Kartenhalters am Behälter oder das Gehäuse oder der Halter eines Smartlabels. Der Kartenhalter kann vorteilhafterweise so konstruiert sein, dass er durch einen einsetzbaren und auswechselbaren Behälteradapter mit verschieden Behältertypen verwendet werden kann.

Der Code braucht schließlich nicht auf einem ohnehin vorhandenen Bestand- oder Anbauteil des Behälters aufgebracht zu sein. Nach einer weiteren vorteilhaften Ausgestaltung der Erfindung kann er auf einem Codeträger angebracht sein, der sich nach Art eines Schilds, Etiketts oder Inlays dauerhaft oder reversibel am Behälter selbst, am Kartenhalter, am Adapter, am Gehäuse des Smartlabels und/oder an einer anderen dafür geeigneten Stelle des Behälters befestigen lässt bzw. befestigbar ist. Grundsätzlich kann er also an jeder Stelle des Behälters angebracht sein, die herkömmlich und/oder maschinenlesbar sind. Optisch lesbar ist regelmäßig diejenige Fläche bzw. Seite des Behälters, die bei seiner Positionierung im Regal auf der Bedienerseite des Regals mit der jeweiligen Technologie unmittelbar oder mittelbar erfassbar ist.

Als maschinenlesbarer Code eignet sich beispielsweise ein Punkte- oder chaotisches Muster (z.B. Braille-Code), ein Strichcode, QR-Code oder Data-Matrix-Code, also ein optisch erfassbarer Code. Er kann auf seine Lesbarkeit hin optimiert sein, indem er auf einem nicht reflektierenden Hintergrund aufgebracht, beispielsweise auf dem Behälter selbst aufgedruckt oder gelasert wird. Alternativ oder zusätzlich kann er mit einer lumineszierenden Substanz versehen sein, beispielsweise mit Nanopartikeln bzw. -pigmenten, wie sie der EP 1 736 914 A2 zu entnehmen sind. Die Technik der lumineszierenden Nanopartikel unterstützt z.B. auch die Darstellung von sehr kleinen Codes, z.B. bei Zellracks, die unter Umständen nur mit einer optischen Vergrößerung, also mithilfe eines Vergrößerungsglases oder Zooms lesbar sind.

Alternativ dazu kann der Code auch per Funk erfassbar sein, also über die oben bereits erwähnten Funktechnologien verfügen und von einem entsprechenden Leser am Regal, in einer Wechselstation oder in einem mobilen Lesegerät erfasst werden. So kann er beispielsweise in einem Near-Field-Communication-(NFC-) Chip abgelegt sein. Der NFC-Chip kann im Smartlabel integriert sein oder außerhalb des Smartlabels, aber zum Beispiel an seinem Gehäuse angebracht sein. Bei seiner Kombination mit einem Smartlabel empfiehlt sich seine Anordnung derart, dass er elektronisch "sichtbar" bleibt, zum Beispiel auf einem separaten Adapter, sodass seine Erfassung von der Elektronik des Smartlabels nicht beeinträchtigt wird.

Die eingangs genannte Aufgabe wird außerdem durch ein Smartlabel für Tierraum- oder Pflanzenlaboreinrichtungen und dergleichen gelöst, das einen Adapter umfasst, der einen optisch und/oder funktechnisch erfassbaren Code umfasst. Das Smartlabel kann in der oben beschriebenen Weise ausgebildet sein. Der Adapter, ein Halter oder Träger des Smartlabels, kann abnehmbar und auswechselbar sein, so dass das Smartlabel grundsätzlich an Behältern unterschiedlicher Systeme befestigt werden kann. Der Adapter wiederum kann eine mechanische Schnittstelle zum Behälter wie einen Haken, Clip oder dergleichen aufweisen, die separat auswechselbar gegenüber dem Adapter ist. Damit kann derselbe Adapter an Behältern unterschiedlicher Systeme befestigt werden. Der Adapter kann jedenfalls den Codeträger darstellen, so dass sich ein Behälter separat von der Anzeige des Smartlabels mit dem optisch und/oder funktechnisch erfassbaren Code beispielsweise mit einem HF-Transponder, kennzeichnen lässt.

Die eingangs genannte Aufgabe ist es, an sich bekannte Verfahren nach Anspruch 9 zur Durchführung der Prozessverfolgung von Vorgängen oder Leistungen in einem Krankenhaus, in einer Tierraumeinrichtung, einer Pflanzenlaboreinrichtung, in einem Lager und dergleichen zuverlässiger und weniger fehleranfällig zu gestalten. Derartige Einrichtungen umfassen regelmäßig Regale und darin angeordnete Behälter, die leer sein können oder ein Objekt oder mehrere Objekte enthalten, und eine Datenbank, die Daten zu den Behältern bzw. zu ihrem Inhalt, nämlich zu den Objekten enthält. Erfindungsgemäß wird die oben genannte Aufgabe auch durch ein Verfahren mit den folgenden Schritten gelöst:
a) Aktivieren einer Erfassungseinrichtung zum Erfassen von Behältern im Regal,
b) Erfassen einer Veränderung an der Behälteranordnung,
c) Vergleich der Daten der Erfassung mit in der Datenbank eingegebenen Daten (Analyse),
d) Ausgabe einer Warnung bei einer Abweichung der miteinander verglichenen Daten.

Die Erfindung basiert auf der Überlegung, dass der Zustand eines Regals mit seinen gefüllten und ggf. leeren Behälterfächern jederzeit maschinenseitig bzw. maschinell festgehalten werden kann. Damit braucht kein Bediener mehr den Überblick über den möglichst vollständigen und korrekten Besatz des Regals mit Behältern zu behalten, sondern kann von dieser Tätigkeit entlastet werden. Nach der Aktivierung bzw. dem Einschalten der Erfassungseinrichtung kann ein aktueller Zustand des Regals erfasst werden. Je nach Aufgabenstellung bzw. Betätigung des Regals können ein vollständiges Regal mit allen Behältern oder ein Abschnitt oder Ausschnitt des Regals erfasst werden. Die Erfassung kann erfindungsgemäß ggf. berührungslos oder kontaktfrei erfolgen. Die dabei erhobenen Daten können durch anschließende Datenverarbeitung, bei einer optischen Erfassung durch Bilddatenverarbeitung, analysiert werden, indem sie mit denjenigen Daten einer früheren Erfassung verglichen werden. Die frühere Erfassung kann beispielsweise einen Grundzustand bei vollständigem und korrektem Besatz mit Behältern oder einen Zielzustand des Regals wiedergeben, beispielsweise mit einer bestimmten regelgerechten Behälterkonfiguration. Ein Grundzustand kann zum Beispiel die richtige Anordnung der Behälter nach Tierstamm und Alter oder nach Experiment darstellen, damit möglichst schnell die zu entnehmenden Behälter gefunden werden können. In ruhigeren Zeiten mit wenigen Zugriffen auf das Regal können die Behälter im Regal nach diesen Kriterien umgeordnet werden, ein sogenanntes "closing gaps". In der Datenbank dagegen ist es einfacher, diese Sortierung vorzunehmen bzw. eine entsprechende Routine zu programmieren, so dass sie den Zielzustand gut vorgeben kann.

Die Daten der früheren Erfassung können vorzugsweise in der Datenbank hinterlegt sein. Bei einer Abweichung zwischen der aktuellen und der früheren Erfassung kann ein Signal ausgegeben werden, das in einem einfachen Fall lediglich eine optische oder akustische Warnung auslöst oder in einer aufwändigeren Ausführung zum Beispiel bereits die Abweichung selbst angibt. Alternativ können die erfassten tatsächlichen Positionsdaten in die Datenbank aufgenommen werden, worauf ebenfalls durch ein Signal hingewiesen werden kann. Erfindungsgemäß kann folglich quasi auf Knopfdruck eine komplette Regaleinrichtung, ein einzelnes Regal oder ein Abschnitt eines Regals auf Vollständigkeit oder korrekten Besatz hin überprüft, verprobt und ggf. berichtigt werden.

Ein erfindungsgemäßer Ablauf für das Ziehen von Behältern kann sich beispielsweise wie folgt gestalten: Auswählen des Regals in der Software bzw. der Datenbank; die Kamera positioniert sich bzw. schwenkt auf das Regal und macht ein Bild; der Benutzer kommt ins Bild; der Bewegungsmelder aktiviert die Kamera und veranlasst Aufnahmen; der Benutzer entnimmt z.B. die Behälter der Fächer A1, B3 und C5; ein letztes Bild wird mit Verlassen des Benutzers aus dem Bildausschnitt geschossen; das letzte Bild wird durch ein Bildanalysewerkzeug mit erstem Bild verglichen, und die gezogenen Behälter werden der Software bzw. der Datenbank gemeldet; im SmartRack, der elektronischen Wiedergabe des Regals in der Software auf der Grundlage der Datenbank, öffnen bzw. aktivieren sich die gemeldeten Behälter A1, B3, C5; der Benutzer bestätigt die Behälter an der Arbeits- bzw. Wechselstation gegebenenfalls mit dem RFID-Chip am Käfigkartenhalter oder einem Strichcodeleser; der Benutzer manipuliert die Inhalte der Behälter physisch durch Vorgänge bzw. Leistungen und dokumentiert die Vorgänge bzw. Leistungen in der Software bzw. in der Datenbank.

Ein erfindungsgemäßer Ablauf für Zurückstellen der Behälter kann sich beispielsweise wie folgt gestalten: der Benutzer hat die Käfiginhalte auf der Arbeits- bzw. Wechselstation verändert und in der Software bzw. Datenbank eingetragen (vgl. oben); der Datensatz des neuen Inhalts des Behälters wird per Infrarot auf das Smartlabel am Behälter übertragen; der Benutzer bringt den Käfig zum Regal zurück; der Benutzer kommt in das Bild der Kamera vor dem Regal; der Bewegungsmelder aktiviert Aufnahmen der Kamera; der Benutzer stellt die Behälter in die leeren Fächer A1, B3 und C5 in das Regal zurück; ein letztes Bild wird mit Verlassen des Benutzers aus dem Bildausschnitt der Kamera geschossen, dabei wird jeweils auch ein gezoomtes Bild der Positionen A1, B3, C5 mit den zurückgestellten Behältern erstellt; dabei wird der Datamatrix-Code auf dem Smartlabel oder auf dem Käfigkartenhalter gelesen und interpretiert; der Datamatrix-Code des Smartlabels auf der Position A1 wird in der Datenbank gesucht und die Positionsangabe in Datenbank mit der Position auf der Aufnahme verglichen; das gleiche geschieht mit Position B3 und C5; die zurückgestellten Behälter wurden demnach korrekt auf ihre vorherigen Positionen zurückgestellt; die Software schließt die im Smartrack geöffneten bzw. aktivierten Behälter. Wurden die Behälter zwar in die leeren Fächer, aber nicht auf ihre vormaligen Positionen zurückgestellt, gibt die Software einen Warnhinweis, die Behälter in die richtigen Positionen zu stellen. Alternativ akzeptiert die Software die neuen Positionen und aktualisiert die Positionsinformation in der Datenbank und gibt einen entsprechenden Hinweis aus.

Dieses Verfahren ist grundsätzlich bei allen Tiertransaktionen wie z.B. Import, Verpaarung, Wurferfassung, Absetzen, Entlassen, aber auch bei der Erbringung von Leistungen z.B. Injektionen, Verhaltensbeobachtung, Käfigchecks, etc. sowie auch bei Beobachtungen der Objekte im Käfig anwendbar.

Nach einer vorteilhaften Ausgestaltung des erfindungsgemäßen Verfahrens kann es aufgrund seiner Automatisierung selbsttätig und routinemäßig zu nahezu jedem beliebigen Zeitpunkt durchgeführt werden. Vorzugsweise wird es nach Abschluss eines Prozesses von Vorgängen und/oder von Leistungen durchgeführt. Denn zu diesem Zeitpunkt ist noch der Bediener des Regals oder der Behälter des letzten Prozesses anwesend und kann auf eine erfindungsgemäße Warnung wegen einer ungewollten Abweichung korrigierend reagieren und seinen potenziellen Fehler nachvollziehen. Eine spätere Fehlerbehebung dagegen ist in der Regel aufwändiger und bietet einen schlechteren Lerneffekt für den Bediener.

Grundsätzlich kann die Erfassungseinrichtung dauerhaft in Betrieb sein oder in Schritt a) durch eine Benutzereingabe wie beispielsweise das Betätigen eines realen oder eines virtuellen Schalters aktiviert werden, zum Beispiel indem der Benutzer das Regal in der Software an- oder auswählt, oder durch die Erfassung eines Sprachbefehls des Benutzers oder durch ein Lesegerät am Rack. Um eine zuverlässige Verprobung eines Regals sicherzustellen, kann auch diese Benutzereingabe überwacht werden, beispielsweise indem eine Aktivierung der Erfassungseinrichtung zu einer Voraussetzung für Tätigkeiten in einer Tierraumeinrichtung gemacht wird. Alternativ kann die Aktivierung benutzerseitig quasi unbewusst, nämlich durch einen Erfassungsvorgang eines Behälters an einer Wechselstation oder durch die Erfassung einer Manipulation bzw. Lageänderung von Behältern im Regal oder durch eine Bewegung an der Käfiganordnung in Schritt b) erfolgen. Sie startet ihre Tätigkeit damit selbsttätig, womit eine Überprüfung des Regals nicht unnötig durchgängig, sondern zwar benutzerunabhängig, aber regelmäßig und zuverlässig dann erfolgt, wenn eine Veränderung aufgetreten sein kann. Damit kann eine hohe Genauigkeit und Qualität der Daten der Datenbank sichergestellt werden.

Eine weitere Verbesserung der Erfassung von Prozessen lässt sich bei Behältern mit einer Identifikationseinrichtung erfindungsgemäß dadurch erreichen, dass die auf einer Identifikationseinrichtung der Behälter wiedergegebenen Daten in Abhängigkeit von Änderungen des Behälterinhalts selbsttätig geändert werden. Eine Änderung der Daten kann infolge von erbrachten Leistungen oder vorgenommenen Tätigkeiten erfolgen, die regelmäßig zum Beispiel auf einer Wechselstation erfasst werden. Aber auch durch selbsttätige prozessfreie Änderungen wie vordefinierte Routinen der Rechnereinheit kann eine selbsttätige Veränderung von Anzeigeninhalten erfolgen. Nach einem Verpaaren zum Beispiel vergehen 21 Tage, bis eine Maus einen Wurf zur Welt bringt. Da die Würfe erfasst und kontrolliert werden müssen, können die Anzeigen bzw. Displays von allen Verpaarungsbehältern, deren Wurf kontrolliert werden muss, selbsttätig auf invers gestellt werden. Nachdem der Wurf erfasst wurde, muss er auf dem Smartlabel angezeigt werden. Dies kann wieder herkömmlich in schwarzweiß erfolgen. Da die Mäuse nach ca. 20 Tagen geschlechtsreif sind, müssen sie aus dem Verpaarungskäfig abgesetzt werden. Diese Maßnahme kann wieder durch eine Inversschaltung der Anzeige signalisiert werden. Nach dem Absetzen werden zwei neue Behälter für Männchen und Weibchen benötigt mit der Stammangabe und der Angabe der Anzahl. Das Display auf dem ursprünglichen Verpaarungs- und Absetzkäfig muss daraufhin wieder korrigiert werden.

Eine derartige Änderung erfolgt also vorzugsweise elektronisch, indem die Identifikationsvorrichtung eine elektronische Anzeige umfasst und sich elektronisch - kabelgebunden oder berührungslos - erfassen und manipulieren lässt. Damit kann das weitgehend manuelle Ändern einer Anzeige am Behälter, also insbesondere das Ausdrucken und manuelle Austauschen von Käfigkarten und damit eine der häufigsten Fehlerquellen entfallen. Zwar lässt sich damit nicht die Qualität der Daten der Datenbank beeinflussen, aber die Bedienung der Tierraumeinrichtung oder des Pflanzenlabors durch Entfall einer aufwändigen Fehlersuche vereinfachen. Insbesondere bei oder nach prozessfreien Änderungen kann zusätzlich ein Signal ausgegeben werden, das die Aufmerksamkeit des Benutzers zum Beispiel optisch oder akustisch auf die Änderung hinweist.

Die Smartlabels werden in der Regel mit Bilddateien beschickt, zum Beispiel mit bmp-files, die auf der Anzeige bzw. dem Display des Smartlabels angezeigt werden. Nach einer weiteren vorteilhaften Ausgestaltung der Erfindung können die Bilddateien in einem dokumentenechten digitalen Archiv abgespeichert werden. Damit kann der Zustand des Tierraums oder der Pflanzenlaboreinrichtung mit seinen Behältern und Inhalten zu jedem Zeitpunkt auch ohne Vorhandensein der Datenbank wieder hergestellt werden. Die Möglichkeit einer dokumentenechten Rückverfolgung von Daten erfüllt z.B. eine Anforderung an die Qualitätssicherung in den Pharmakonzernen, die so genannte "gute Laborpraxis" (Good Laboratory Practice, GLP).

Gestützt auf elektronische Identifikationseinrichtungen kann eine Inventurabfrage über den Bestand an Behältern eines Regals oder mehrerer Regale nicht nur über die zuerst genannte Erfassung der Behälter oder des Regals oder mehrere Regale vorgenommen werden, sondern ergänzend oder alternativ auch über Erfassung der Identifikationseinrichtungen und deren Daten. Zusätzlich lässt sich gestützt auf eine elektronische Identifikationseinrichtung eine Aktualisierung der Daten der Identifikationseinrichtungen jedenfalls in der Datenbank vornehmen und/oder nur ein Abschnitt eines Regals bis hin zu nur einem einzelnen Behälter hinsichtlich seines Orts und Inhalts nach Art einer Stichprobe überprüfen.

Verfügt der Behälter an einer nahezu beliebigen Stelle außerhalb einer Käfigkarte oder einer sonstigen Anzeige über einen separaten individuellen Identifikationscode, kann nach einer weiteren vorteilhaften Ausgestaltung der Erfindung der individueller Code in der Datenbank erfasst, die Daten des Behälters und/oder seines Inhalts dem Code zugeordnet, die dem Code zugeordneten Daten in Abhängigkeit von prozessfreien oder prozessbedingten Änderungen des Behälterinhalts geändert, und die Daten durch Erfassen des ihnen zugeordneten Codes abgerufen werden, wobei die Schritte jederzeit separat und unabhängig voneinander durchführbar sind.

Das Prinzip der Erfindung wird anschließend anhand einer Zeichnung beispielshalber noch näher erläutert. In der Zeichnung zeigen:
- Figur 1:: das Auswählen eines Regals,
- Figur 2:: das Ziehen eines Käfigs,
- Figur 3:: das Zurückstellen eines Käfigs in einer erfindungsgemäßen Vorrichtung,
- Figur 4:: einen Smartlabelhalter von einer Vorderseite aus,
- Figur 5:: den Smartlabelhalter von einer Rückseite aus,
- Figur 6:: den Smartlabelhalter samt einem Smartlabel,
- Figur 7:: einen Verfahrensablauf,
- Figur 8:: die Rückseite eines kleineren Smartlabels,
- Figur 9:: die Rückseite eines Käfigkartenhalters,
- Figur 10:: Smartlabels mit Code im Display und außerhalb des Displays,
- Figur 11: eine Skizze über das Anbringen eines Prototypens des erfindungsgemäßen Smart-labelhalters.

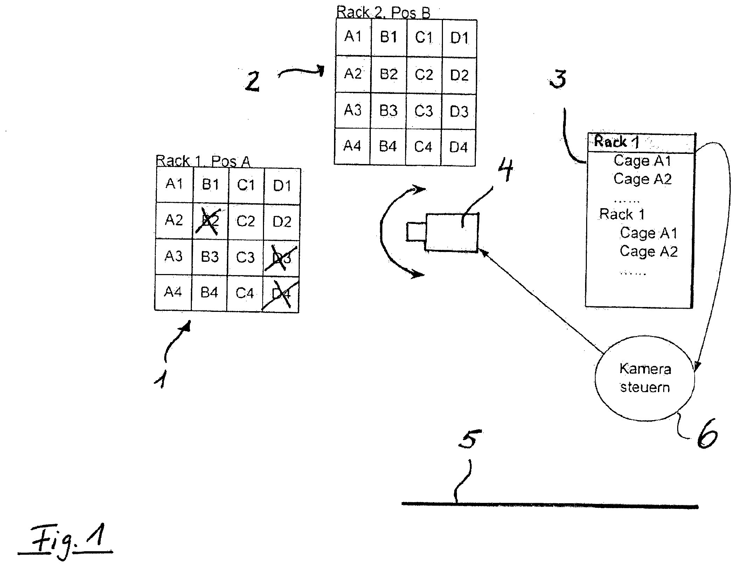

Figur 1 veranschaulicht das Auswählen eines Regals bzw. Racks 1 von zwei vorhandenen Racks 1, 2. Die zwei Racks 1, 2, die jeweils sechzehn Käfige A1, A2... D3, D4 in den Spalten A, B, C, D und in den Reihen 1, 2, 3, 4 aufnehmen, sind in einem Arbeitsraum einer Tierraumeinrichtung positioniert. Jeder Käfig A1, A2... D3, D4 trägt einen nicht separat dargestellten Kartenhalter bzw. eine Käfigkarte als Identifikationseinrichtung mit Daten zum Käfig A1, A2... D3, D4 und zu seinem Inhalt. Die Daten sind herkömmlich lesbar und zusätzlich per RFID-Technik und/oder Barcodes auf dem Kartenhalter abgelegt. Die beiden Racks 1, 2 sind samt ihren Positionen A, B in einer auf einem Computer 3 installierten und Datenbank-basierten Software erfasst, dem Cage Explorer bzw. SmartRack©. Im Arbeitsraum ist eine Webcam 4 als Kamera installiert, die die beiden Racks 1, 2 insgesamt und den Ort jedes einzelnen Käfigs A1, A2... D3, D4 im Rack 1, 2 erfassen kann. Die Webcam 4 erlaubt das Hinterlegen von Positionen A, B der Racks 1, 2 bzw. das Anfahren von bestimmten Positionen A oder B im Arbeitsraum durch eine Software-API (Application Programming Interface bzw. Programmierschnittstelle). Dazu kann beispielsweise das Rack 1 im Computer 3 bzw. im SmartRack© angewählt werden, woraufhin die Webcam 4 durch Ausgabe des Befehls 6 "Kamera steuern" auf das Rack 1 gerichtet wird.

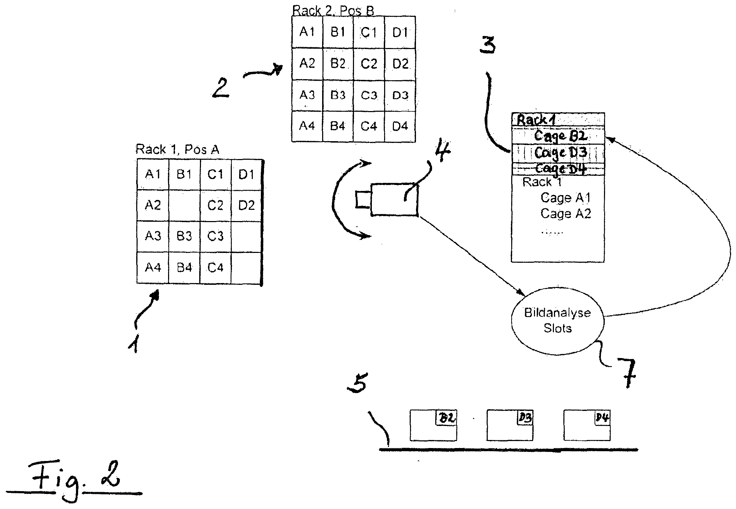

Ein Benutzer will die Käfige B2, D3 und D4 aus dem Rack 1 an einer Wechselstation 5 bearbeiten. Dazu wählt er per Cage Explorer das Rack 1 aus Die Software übergibt die Position A des Racks 1 im Raum unmittelbar an die Webcam 4 kabelgebunden oder via WLAN, und die Webcam 4 fährt die Position A an und macht ein Bild des Racks 1. Der Benutzer entnimmt die Käfige B2, D3 und D4 aus dem Rack 1. Die Webcam 4 macht weitere Bilder und erfasst das Rack 1 insgesamt sowie jeden Ort bzw. das Fach bzw. Slot jedes einzelnen Käfigs A1, A2... D3, D4. Ein Bildanalyseprogramm auf dem Computer 3 analysiert in einem Verarbeitungsprozess 7, dass die Slots der Käfige B2, D3 und D4 leer sind (vgl. Figur 2), und leitet diese Information an den Cage Explorer auf dem Computer 3 weiter. Der Cage Explorer "öffnet" die Käfige B2, D3 und D4 auf der Software-Ebene.

Der Vorteil dieses Verfahrens gegenüber der folgenden Variante ist, dass der Benutzer die Käfige B2, D3 und D4 am Computer 3 im Cage Explorer bereits geöffnet vorfindet, wenn er mit den Käfigen B2, D3 und D4 an der Wechselstation 5 ankommt. Dort kann er sie zusätzlich mittels der RFID auf dem Käfigkartenhalter oder der Käfigkarte selbst verproben, indem die Informationen der Webcam 4 über die leeren Orte der Käfige B2, D3 und D4 im Rack 1 mit den Daten aus der RFID-Erfassung der Käfige B2, D3 und D4 an der Wechselstation 5 abgeglichen werden. Statt RFID ist auch ein Verfahren mit Barcode möglich.

Damit ist ein zweistufiges Verfahren möglich, nämlich das manuelle Markieren im Computer 3 einerseits und die Gegenprobe bezüglich der korrekten Auswahl der Käfige B2, D3 und D4 beim Eintreffen an der Wechselstation 5 mittels RFID und der in der Datenbank gespeicherten Information andererseits.

Folgende Variante ist ebenfalls möglich: Ein Benutzer will die Käfige B2, D3 und D4 aus dem Rack 1 an einer Wechselstation 5 bearbeiten. Dazu entnimmt er die Käfige B2, D3 und D4 aus dem Rack 1, in diesem Fall aber ohne vorherige Eingabe am Computer 3. Er kommt mit den Käfigen B2, D3 und D4 an der Wechselstation 5 an. Hier werden die RFID-/Barcodedaten der Käfige B2, D3 und D4 erfasst. Die Positionierung der Webcam 4 und die Bildanalyse ihrer Aufnahmen finden erst statt, wenn die RFID-Daten der Käfige B2, D3 und D4 an der Wechselstation 5 gelesen wurden. Die Daten werden daraufhin mit den Aufnahmen der Webcam 4 abgeglichen.

Figur 2 zeigt das Ziehen eines Käfigs: Die Aufzeichnung, durch die Webcam 4 startet, wenn sie nicht softwaregesteuert stattfindet, z.B. durch Auswahl des Racks 1 am Computer 3 in der Software bzw. im SmartRack©, sobald sich der Benutzer vor dem Rack 1 bewegt, und endet, wenn keine Bewegungen mehr stattfinden. Das letzte Bild der Webcam 4 wird auf offene Slots hin analysiert. Die offenen Slotpositionen werden in Form von Koordinaten an das SmartRack© übergeben. Das SmartRack© öffnet den jeweiligen Käfig B2, D3 und D4. Durch Lesen der RFID oder des Barcodes an der Wechselstation 5 wird die Position zusätzlich verprobt, indem die Daten der RFID oder des Barcodes mit den hinterlegten Daten des Cage Explorer verglichen werden.

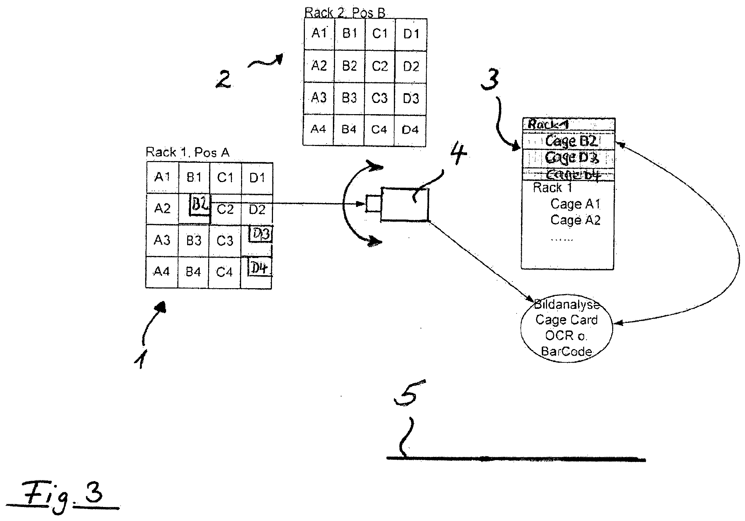

Figur 3 das Zurückstellen eines Käfigs geschieht wie folgt: Nachdem die Tiertransaktionen auf der Wechselstation 5 durchgeführt wurden, werden nach der Veränderung der Inhalte der Käfige B2, D3 und D4 die Käfigkarten inklusive ihrer Positionen neu ausgedruckt. Unter Umstände werden am SmartRack© für die gezogenen Käfige B2, D3 und D4 auch veränderte Käfigpositionen am SmartRack© erfasst. Der Benutzer bringt die Käfige B2, D3 und D4 an die auf den Käfigkarten ausgedruckten Positionen zurück.

Die Aufzeichnung durch die Webcam 4 startet, wenn sie nicht softwaregesteuert stattfindet, z.B. durch Auswahl des Racks, in der Software, sobald sich der Benutzer vor dem Rack 1 bewegt und endet, wenn keine Bewegungen mehr stattfinden. Durch Analyse der Käfigposition (OCR/Barcode/Datamatrixcode) auf der Käfigkarte und dem Vergleich mit der tatsächlichen Position im Rack 1 wird jeder Käfig B2, D3 und D4 in einem Verarbeitungsprozess 8 visuell verprobt. Über die Käfig-ID wird die Position jedes Käfigs B2, D3 und D4 im Rack 1 in der Datenbank des Cage Explorers verprobt.

Bei falscher Positionierung eines der Käfige B2, D3 oder D4 im Rack 1 wird ein Warnhinweis am Computer 3 ausgeben.

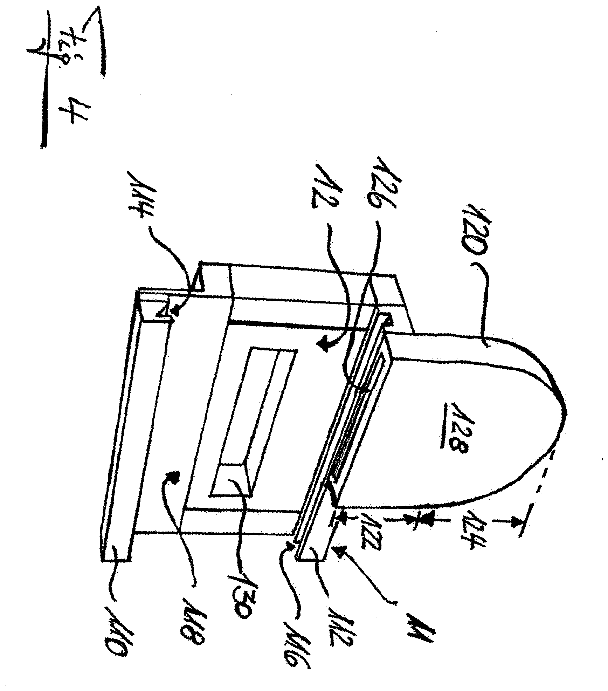

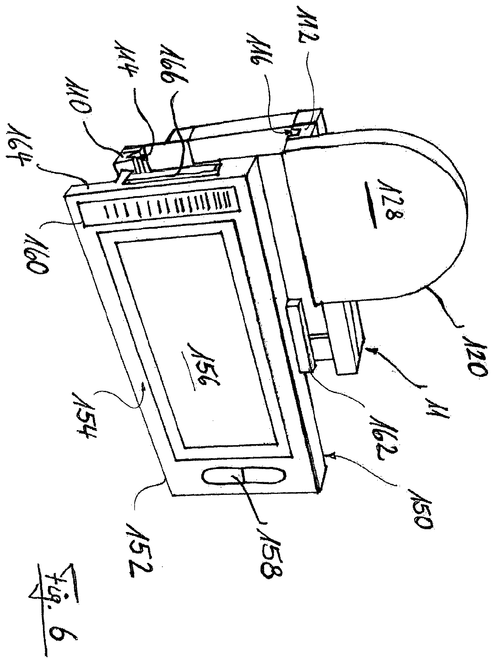

Figur 4 zeigt einen Smartlabelhalter 11. Er selbst ersetzt den Käfigkartenhalter. Die papiernen Käfigkarte gemäß Figuren 1 bis 3 wird durch ein Smartlabel (vgl. Figur 6) ersetzt. Der erfindungsgemäße Smartlabelhalter 11 ist quasi rahmenförmig aufgebaut und schließt eine plattenförmige Basis 12 ein. Sie ist austauschbar im Smartlabelhalter 11 angebracht und lässt sich in dessen rahmenförmiger Struktur verrasten. Der Smartlabelhalter 11 umfasst in seinem unteren Bereich eine horizontal über seine gesamte Breite verlaufende Unterschiene 110 und eine parallel dazu verlaufende Oberschiene 112. In die Unterschiene 110 ist eine V-förmige Nut 114 eingefräst, die einer U-förmigen Nut 116 in der Oberschiene 112 zugewandt ist. Die Unterschiene 110 und die Oberschiene 112 liegen vor einer Halterebene 118 des Smartlabelhalters 11, in der auch die Basis 12 liegt.

Auf der Oberschiene 112 und in einer Richtung auf den Benutzer zu ist ein Chiphalter 120 angebracht, der über die Oberschiene 112 hinaus vom Smartlabelhalter 11 absteht. Der scheibenförmige Chiphalter 120 besteht aus einem unteren Abschnitt 122 mit einer rechteckigen und aus einem oberen Abschnitt 124 mit einer halbkreisförmigen Konturweitgehen gleicher Höhe und Breite, so dass er einen nicht dargestellten münzenförmigen Chip aufnehmen kann. Der Chip lässt sich in dem unteren Abschnitt 122 von dessen Unterseite aus durch einen Aufnahmeschlitz 126 einschieben und dort entnehmbar verrasten. Der Chiphalter 120 kann vorzugweise RFID-Chips aufnehmen, die gegebenenfalls dem Smartlabelhalter 11 wieder entnommen werden können. Der Chiphalter 120 bietet außerdem eine dem Benutzer zugewandte Ansichtsfläche 128.

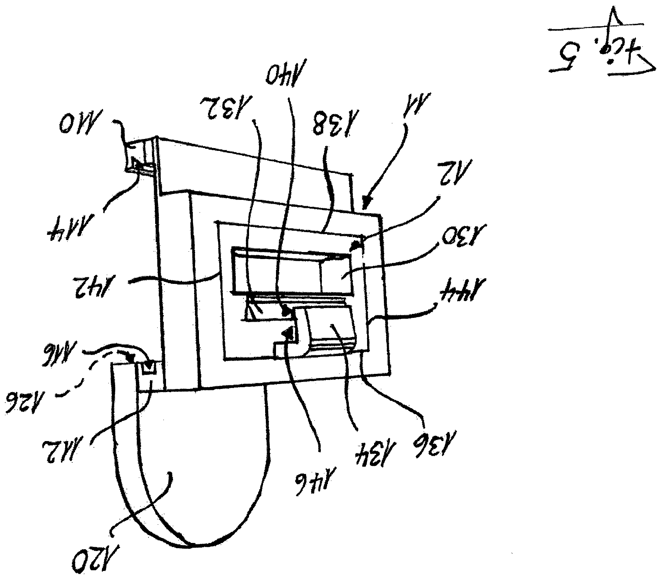

Figur 5 zeigt die Rückseite des Smartlabelhalters 11. In dieser Darstellung sind auch die Unterschiene 110 mit der V-Nut 114 und die Oberschiene 112 mit der U-Nut 116 zu erkennen. Der Smartlabelhalter 11 kann zwischen seiner Unterschiene 110 und seiner Oberschiene 112 und vor seiner Halterebene 118 ein in den Figuren 4 und 5 nicht dargestelltes Smartlabel aufnehmen. Sobald es im Smartlabelhalter 11 ausgenommen ist, verschließt es den Aufnahmeschlitz 126 des Chiphalters 120, so dass ein dort eingesetzter Chip nicht versehentlich herausfallen und verloren gehen kann.

Darüber hinaus zeigt die Figur 5 die rückseitige Ausstattung der Basis 12: Aus Gründen der Materialersparnis umfasst sie ein Fenster 130 in ihrem unteren Bereich. Darüber ist ein Widerlager 132 angeordnet, das im Querschnitt dreiecksförmig von der Rückseite der Basis 12 absteht. Es wirkt zusammen mit einem hakenförmigen Käfigadapter 134, der an einer Oberkante 136 der Basis 12 orthogonal von ihr absteht, um anschließend in einer Richtung weitgehend parallel zur Basis 12 abgewinkelt über das Widerlager 132 hinweg zu verlaufen. Damit verbleibt zwischen dem Widerlager 132 einerseits und dem hakenförmigen Käfigadapter 134 andererseits ein im Querschnitt weitgehend rechteckiger Zwischenraum 146, der in demjenigen Bereich, in dem der Käfigadapter 134 das Widerlager 132 überdeckt, in einen Spalt 140 übergeht.

Die weitgehend plattenförmige rechteckige Basis 12 lässt sich aus dem rahmenförmigen Smartlabelhalter 11 entnehmen bzw. einsetzen und entweder an ihrer waagrechten Oberkante 136 bzw. Unterkante 138 oder an ihren senkrechten Schmalseiten 142, 144 im Smartlabelhalter 11 verrasten. Damit kann der Smartlabelhalter 11 an unterschiedliche Behälter, wie Käfige oder dergleichen angebracht bzw. an deren Anbringung angepasst werden. Für einen Smartlabelhalter 11 bzw. die Basis 12 bietet ein Behälter als Befestigungseinrichtung zum Beispiel einen horizontal verlaufenden Steg oder Bügel, der durch den Spalt 140 hindurch in den Zwischenraum 146 zwischen dem Käfigadapter 134 und dem Widerlager 132 bzw. der Basis 12 gezwungen wird. Damit ist der Smartlabelhalter 11 am Behälter befestigt. Die Ausgestaltung des Käfigadapters 134 und des Widerlagers 132 führen darüber hinaus dazu, dass der Smartlabelhalter 11 um eine horizontale Achse am Behälter verschwenkt und damit in seiner Neigung verändert werden kann. Damit kann sich ein Benutzer das Ablesen des Smartlabels 11 erleichtern, wenn er damit beispielsweise Spiegelungen ausschließen kann.

Figur 6 zeigt einen Cage Talker® zur Organisation eines Behälters oder Käfigs bzw. seines Inhalts in einer Laboreinrichtung, bestehend aus dem Smartlabelhalter 11 und einem davor wiedergegebenen, noch nicht montierten Smartlabel 150. In seinem kubischen Gehäuse 152 weist es auf seiner dem Benutzer zugewandten Vorderseite 154 ein räumlich beherrschendes querformatig rechteckiges Display 156 auf, auf den Daten des Behälters bzw. seines Inhalts auf einem sogenannten elektronischen Papier wiedergegeben werden. Die Wiedergabe stellt eine Bilddatei, beispielsweise eine bmp-Datei dar. Bei entsprechender Ausstattung des Smartlabels 150 werden mehrere derartiger Bilddateien im Smartlabel 150 archiviert, so dass zwischen verschiedene Wiedergaben gewechselt bzw. geblättert werden kann. Rechts neben dem Display 156 weist das Smartlabel 150 eine Infrarotsende- bzw. Empfangseinrichtung 158 auf, über die eine Kommunikation mit dem Smartlabel 150 aufgebaut und betrieben werden kann. Links neben dem Display 156 ist ein Feld 160 mit einem Strichcode angebracht, der das Smartlabel 150 individualisiert und von anderen Smartlabels unterscheidbar macht.

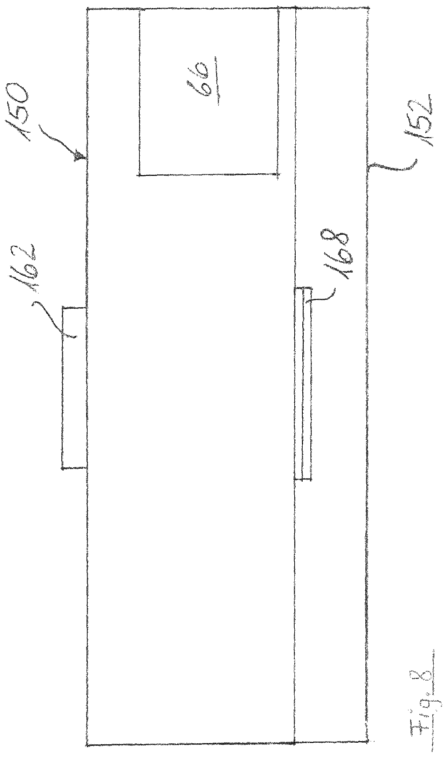

Auf der Oberseite des Gehäuses 152 ist eine kurze obere Feder 162 angebracht, die mit der U-Nut 116 des Smartlabelhalters 11 zusammenwirkt. Eine vergleichbare, im Querschnitt dreiecksförmige untere Feder 168 (nur Figur 8) ist auf der Rückseite des Gehäuses 152 etwa in gleicher Höhe wie die Feder 162 angebracht, um mit der V-Nut 114 des Smartlabelhalters 11 zusammenzuwirken. Nach Einsetzen einer der beiden Federn in eine der beiden Nuten 114, 116 lässt sich die andere Feder in die jeweils andere Nut 116, 114 einrasten, so dass das Smartlabel 150 unverlierbar im Smartlabelhalter 11 befestigt ist. Damit ist es betriebsbereit und kann an einem Behälter mittels Käfigadapter 134 (vgl. Figur 2) befestigt werden.

An seiner linken Stirnfläche 164 weist das Gehäuse152 eine Öffnung 166 auf, in die ein sogenannter Klicker eingesetzt werden kann. Damit kann der Smartlabelhalter 11 bzw. das Smartlabel 150 auf einfache Art und Weise optisch markiert werden, indem ein fahnenförmiger Klicker in der Öffnung 166 befestigt wird. Er kann in derselben Ebene wie das Smartlabel 150 bzw. sein Display 156 oder orthogonal davon vom Smartlabel 150 abstehen und eine einfache Information zum Behälterinhalt angeben.

Alternativ oder zusätzlich bietet die Ansichtsfläche 128 des Chiphalters 120 die Möglichkeit, das Smartlabel 150 oder den Smartlabelhalter 11 durch Befestigen beispielsweise von selbstklebenden Etiketten oder Symbolen eindeutig und auch auf größere Entfernung wahrnehmbar zu markieren.

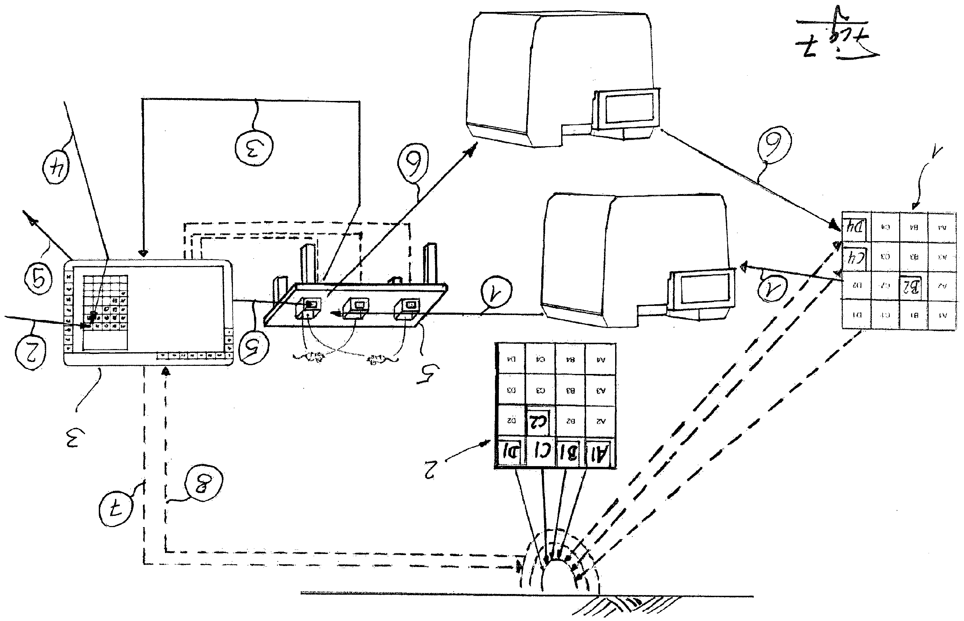

Ein Beispiel für einen Verfahrensablauf zeigt Figur 7 stark schematisiert:
(1) Leerer oder gefüllter Käfig mit SmartLabel wird zur Wechselstation gebracht
(2) Manuelle Auswahl des Racks oder einer Käfigposition in der Anwendungssoftware, ansonsten gleich Schritt 3)
(3) Käfig-ID eines leeren Käfigs auf Slot und/oder Rack registrieren oder vorhandenen Käfig mit ID auf Wechselstation öffnen
(4) Eingabe, mit welchen Tieren der Käfig benutzt wird (Inhalt d. Käfigs). Bei Galilei CTS/RTI wird der Käfig bereits mit Schritt 3 als benutzt gebucht. Der Käfiginhalt spielt hier keine Rolle.
(5) Inhalt d. Käfigs auf SmartLabel schreiben. Ersetzt die gedruckte Käfigkarte. Ansonsten bei Galilei CTS/RTI lediglich Käfigslot und/oder Rack auf SmartLabel drucken
(6) Käfig mit SmartLabel wird zum Rack gebracht und auf die auf dem SmartLabel gedruckte Position gestellt.
(7) Käfig-Soll-Bestand prüfen: Ist Käfig-ID vorhanden? Ersetzt das RFID-Census-verfahren
(8) Antwort des SmartLabels Käfig-Ist- Bestand: Ja, Käfig-ID vorhanden oder es kommt keine Antwort
(9) Vergleich zwischen Soll- und Istbestand = Permanente Käfig-Inventurdifferenz.

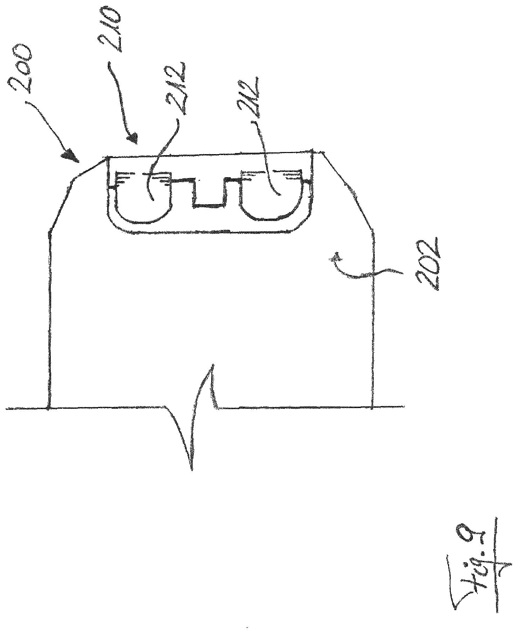

Figur 8 zeigt die Rückseite des Smartlabels 150. Figur 9 zeigt ausschnittsweise einen Befestigungsabschnitt 210 eine Käfigkartenhalters 200 mit zwei Befestigungsnasen 212, die sich über eine Ersteckungsebene 202 des Halters 200 erheben und mit denen der Halter 200 an einem Käfig eingehängt werden kann.

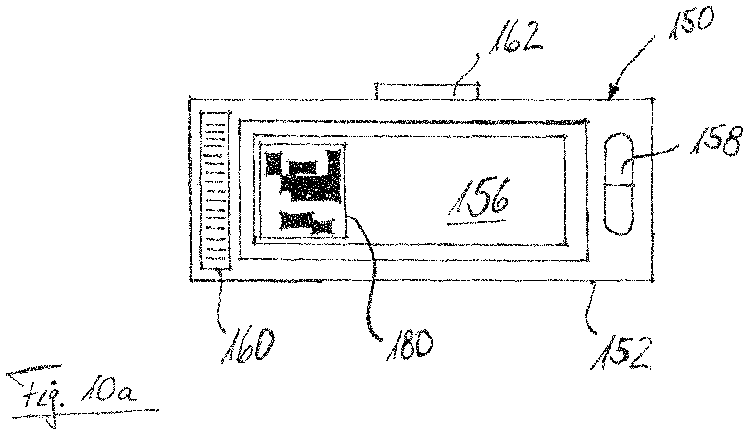

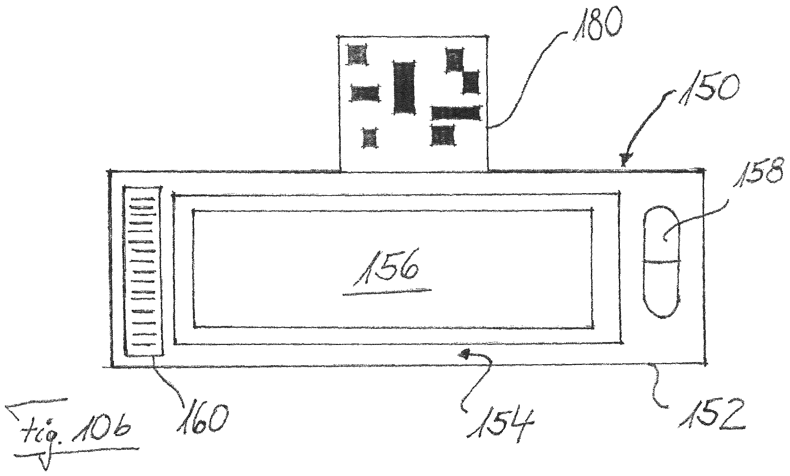

Figuren 10a und 10b zeigen Smartlabels 150, die sich lediglich durch die Anordnung bzw. Anbringung eines Datamatrix-Codes 180 unterscheiden: gemäß Figur 10a kann der Code 180 im Anzeigefeld 156 des Smartlabels 150 wiedergegeben werden. Dort benötigt er jedoch Anzeigefläche, die für andere Informationen über den Behälter bzw. seinen Inhalt folglich nicht zur Verfügung stehen kann. Daher kann der Code 180 auch außerhalb des Anzeigefelds 156, zum Beispiel oberhalb und separat am Gehäuse 152 angebracht sein.

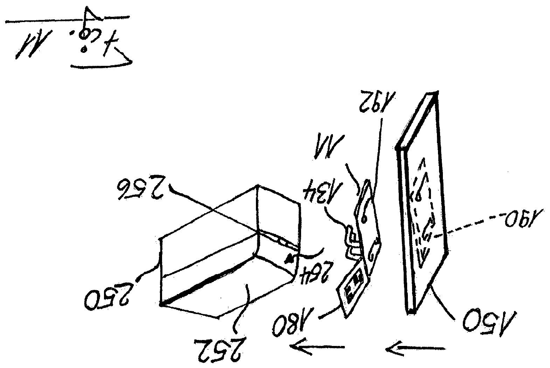

Figur 11 gibt eine Skizze eines Prototypens des erfindungsgemäßen Smartlabelhalters 11 und dessen Anbringung an einem Behälter 250 wider: der Behälter 250 umfasst einen Deckel 252, an dessen Vorderseite 254 eine Aussparung 256 angebracht ist, in die die Befestigungsnasen 212 des Käfigkartenhalters 200 gemäß Figur 8 oder der hakenförmige Käfigadapter 134 gemäß Figur 5 zur Befestigung eingreifen können. Das Smartlabel 150 trägt auf seiner Rückseite eine Aussparung 190, in die ein Anschluss 192 am Smartlabelhalter 11 eingreift.

In den Voranmeldungen ist die Erfindung wie folgt wiedergegeben:
Beispielsweise in der genetischen Forschung, insbesondere in der Tier- und Pflanzenforschung, wird mit einer großen Anzahl von Versuchsobjekten gearbeitet. Versuchstiere in der Tierforschung werden in offener Haltung in entsprechenden Regalen oder Racks, in deren Fächern Käfige angeordnet werden können, spezifiziert pathogenfrei in z. B. einzeln belüfteten Käfigen (IVCs) oder in Isolatoren gehalten. In separaten Wechselstationen erfolgt beispielsweise ein Umsetzen bzw. Verlegen der Versuchstiere in andere Käfige. Käfige mit einer eindeutigen Käfigkartennummer in Racks und Rackslots (Lokation) entsprechen allerdings nicht den auf der Käfigkarte gedruckten und in der Datenbank vermerkten Lokationen, wenn Käfigbenutzer die Käfige falsch platzieren. In der Pflanzenforschung herrschen vergleichbare Verhältnisse.

Eine besondere Randbedingung stellt die Tatsache dar, dass Racks von Zeit zu Zeit chemisch und/oder thermisch sterilisiert, beispielsweise autoklaviert (132 Grad Celsius, 1h) werden müssen, somit eine Lösung auf der Basis von elektronischen Komponenten, z.B. RFID-Leser für jeden Rackslot, nicht sinnvoll erscheint. Da Racks bis zu 120 Slots für Käfige enthalten können, würden auch die Kosten einer solchen Lösung im Verhältnis zu dem angestrebten Ziel unverhältnismäßig hoch sein. Bei mechanischen Lösungen entstehen ebenfalls ein hoher Kostenaufwand und das Problem der Datenübertragung zum Computer. Rackschablonen sind kostenaufwändig und müssen unterschiedliche Racktypen abdecken.

Die Erfindung schildert ein System, welches die physischen Lokationen der Käfige im Rack und deren Slotpositionen im Rack sowie deren Käfigkarten verprobt.

Idealerweise wird bereits beim Ziehen des Käfigs aus dem Rack der entsprechende Slot in der Käfig- bzw. Tierverwaltungs-Software markiert und geöffnet. Durch das Lesen der Käfigkarte, welche mit einem RFID Chip markiert ist oder in einem mit einem Chip markierten Käfigkartenhalter steckt, auf einem RFID-Reader, der in einer Wechselstation enthalten ist oder mobil transportiert wird, oder durch das Scannen des Barcodes auf der Käfigkarte kann der Käfig mit der in der Datenbank vermerkten Rack- und Slotposition verprobt werden.

Nachdem die Tier- oder Pflanzentransaktionen auf einer Wechselstation durchgeführt und die Käfiginhalte verändert wurden, werden neue Käfigkarten gedruckt und in die Käfigkartenhalter gesteckt. Die Käfige werden dann wieder zum Rack gebracht und in die auf den Käfigkarten vermerkten Rackslots gesteckt.

Die Lösung stützt sich auf ein Verfahren, ein Computerprogrammprodukt und eine Wechselstation zur Prozessverfolgung, wie sie in der WO 2011/124 209 des Anmelders beschrieben sind. Sie basiert auf der Überlegung, dass der Zustand eines Racks mit seinen gefüllten und ggf. leeren Slots jederzeit möglichst berührungslos festgehalten werden kann. Eine berührungslose Erfassung kann beispielsweise per Funk, z.B. durch Abfahren des Racks mit Richtantennen, oder optisch, beispielsweise mit einer Kamera pro Rack oder einer bewegbaren, beispielsweise schwenkbaren und/oder fahrbaren Kamera, z.B. Webcam oder mit Lichtschranken, erfolgen. Eine bewegbare Kamera beispielsweise kann mittels Elektromotor auf einer Vertikalschiene verfahrbar sein, wobei sich die Vertikalschiene selbst wiederum mittels Elektromotor auf einer Horizontalschiene bewegt. Die Schienen können jeweils entweder an jedem Rack oder von ihnen unabhängig z.B. an den Wänden des Tierraums für viele Racks so angebracht werden, dass sich die Kamera in relativ kurzem Abstand vor den Racks bewegen kann. Diese Methode hat den Vorteil, dass man sie aufgrund des kurzen Abstandes zum Käfig sogar für die Beobachtung der Tiere im Käfig einsetzen kann.

Durch Daten- bzw. Bildverarbeitung kann der Zustand analysiert werden, nachdem das Rack - entweder durch die Auswahl in der Software (Rackpositionen im Raum sind hinterlegt) oder durch Lesen des Käfigs an der Wechselstation - mit einer Erfassungseinrichtung, z.B. der Kamera, angefahren wurde. Die Daten- bzw. Bildanalyse kann sowohl nach dem Ziehen des Käfigs leere Slotpositionen in einem Rack feststellen als auch die nach dem Zurückstellen auf der Käfigkarte als Klartext, Barcode, Datamatrix, gedruckte Käfigposition oder Funksignal feststellen und dann mit Hilfe der entsprechenden Analysetools die Daten bzw. das Bild analysieren und die Übereinstimmung mit den in der Datenbank hinterlegten Angaben überprüfen.

Die Erfindung lässt sich folglich beschreiben als Tierraumeinrichtung oder Pflanzenlaboreinrichtung gemäß WO 2011/124 209, geeignet zur Durchführung eines Verfahrens zur Prozessverfolgung von Vorgängen und/oder Leistungen, die wenigstens ein Objekt betreffen, mit einer Käfiganordnung (Rack) mit Käfigen, die zumindest ein Objekt enthalten, mit einer Vorrichtung zum Erfassen der Käfige, wobei eine zusätzliche, insbesondere funkbasierte und/oder optische Erfassungseinrichtung, die die Käfiganordnung insgesamt und Orte (Slots) einzelner Käfige darin erfasst, mit einer Umwandlungseinheit, die die erfassten Daten in elektronisch verarbeitbare Daten umwandelt, mit einer Datenschnittstelle zur Weiterleitung der Daten an eine Rechnereinheit, mit einer Vergleichs- bzw. Analyseeinheit, in der die Daten mit hinterlegten Daten verglichen bzw. analysiert werden können.

Sie lässt sich auch beschreiben als Verfahren nach WO 2011/124 209 zur Prozessverfolgung von Vorgängen und/oder Leistungen, die wenigstens ein Objekt betreffen, in einer Tierraumeinrichtung oder Pflanzenlaboreinrichtung, mit den folgenden Schritten:
a) Aktivieren einer Erfassungseinrichtung zur Erfassung von Käfigen in der Käfiganordnung,
b) Funkbasiertes und/oder optisches Erfassen der Käfiganordnung (Aufzeichnen),
c) Vergleich der Daten der Erfassung mit eingegebenen Daten (Analyse),
d) Ausgabe einer Warnung bei einer Abweichung der untereinander verglichenen Daten.

Verfahren nach WO 2011/124 209 zur Prozessverfolgung von Vorgängen und/oder Leistungen, die wenigstens ein Objekt betreffen, in einer Tierraumeinrichtung oder Pflanzenlaboreinrichtung, insbesondere nach dem obigen Verfahrensanspruch, dadurch gekennzeichnet, dass nach Abschluss eines Prozesses von Vorgängen und/oder Leistungen die folgenden Schritte ablaufen:
e) Aktivieren einer Erfassungseinrichtung zur Erfassung der Käfige in der Käfiganordnung,
f) Funkbasiertes und/oder optisches Erfassen der Käfiganordnung (Aufzeichnen),
g) Vergleich der Daten der Erfassung mit eingegebenen Daten (Analyse),
h) Ausgabe einer Warnung bei einer Abweichung der untereinander verglichenen Daten.

Zusätzlich kann in einem der obigen Verfahren das Aktivieren in Schritt a) und/oder e) durch eine Benutzereingabe erfolgen. Zusätzlich kann der Erfassungsvorgang (Aufzeichnen) in Schritt b) und oder f) durch die Erfassung einer Bewegung an der Käfiganordnung gestartet werden. Schließlich kann das Aktivieren in Schritt a) und oder e) durch einen Erfassungsvorgang von Käfigen an der Wechselstation erfolgen.

Der Aspekt der Smartlabels wurde vom Erfinder beschrieben:
Beispielsweise in der Tierforschung, insbesondere in der genetischen Forschung wird mit einer großen Anzahl von Versuchstieren gearbeitet. Versuchstiere werden in offener oder geschlossener Haltung in entsprechenden Regalen oder Racks in deren Fächern Käfige angeordnet werden können, spezifiziert patogenfrei in zum Beispiel einzelnen belüfteten Käfigen (IVC) oder in Isolatoren gehalten. Die Racks sind in der Regel in Reinräumen aufgestellt zu denen man nur über eine Schleuse Zugang hat. Die physische Arbeit der Tierpfleger und Forscher erfolgt in Schutzkleidung vergleichsweise der Kleidung in einem Operationssaal. Alles Material wird entweder über Autoklaven oder nach einer Begasung mit Wasserstoffperoxid eingeschleust.

In separaten Wechselstationen erfolgt beispielsweise ein Umsetzen bzw. ein Verlegen der Versuchstiere in andere Käfige. Jede Veränderung des Käfiginhaltes muss auf einer Käfigkarte vermerkt werden. Die Käfige werden nach ihrer Manipulation mit den Käfigkarten, die sich in den Käfigkartenhaltern befinden, zurück in das Rack gestellt. Käfige haben eine eindeutige Käfignummer, die auf ein Rack bzw. auf einen Käfigslot dieses Racks registriert wird um den Käfig später über die Software schnell zu finden. Die eindeutige Käfignummer wird oft mit einem Barcode oder einer RFID Nummer verbunden um das Suchen des Käfigs in der Software weiter zu beschleunigen. Der Barcode wird auf die Käfigkarte gedruckt, die RFID kann entweder im Papier der Käfigkarte integriert sein oder ist auf dem Käfigkartenhalter oder auf dem Käfig selbst angebracht sein. Der Käfigkartenhalter beinhaltet die Käfigkarte aus Papier, die nach jeder Änderung des Käfiginhaltes neu ausgedruckt wird.

Ein Problem besteht darin, dass die Käfigkarten und die Käfigkartenhalter und die Käfigenkartenhalter und die Käfige regelmäßig verwechselt werden, wenn mehrere Käfige auf einer Wechselstation manipuliert werden und viele Käfigkarten ausgedruckt werden. Um einer Verwechslung zwischen Käfig und Käfigkartenhalter vorzubeugen, sind die Halter bei neueren Systemen (Fa. Tecniplast, Fa. Allentown) in der Regel fest mit dem Käfig verbunden und müssen nicht mehr vom Käfig abgenommen werden, wenn die Käfige geöffnet werden. Es kommt aber auch mit den heutigen Verfahren regelmäßig zu dem Problem, dass mehrere Käfigkarten hintereinander gesteckt werden, auf dem Boden liegen, und die Zuordnung zu den Käfigen regelmäßig schwierig und zeitaufwendig ist.

Ebenso geht das Druckerpapier oder das Farbband meist dann zu Ende, wenn es dringend gebraucht wird. Neues Material unmittelbar zur Verfügung zu stellen ist schwierig, weil es neu eingeschleust werden muss. Ebenfalls bereitet die Benutzung der Drucker immer wieder Probleme. Immer wieder klemmt der Autocutter. Die Benutzer zerren dann am Papier und beschädigen dadurch den das Drucksystem, so dass dieses zu Reparaturzwecken ausgeschleust werden muss und ein neues Druckersystem eingeschleust werden muss.

Käfigkarten stellen oft die einzige Dokumentation dar, um nachzuvollziehen was mit den Tieren im Käfig geschehen ist. Die Beschreibung des Käfiginhalts am entsprechenden Käfig ist nach wie vor gesetzlich vorgeschrieben. Auch kann die Nachvollziehbarkeit der Historie der Papierkäfigkarten z. B. "durch Verlieren" der Käfigkarten leicht unterbrochen werden.

Zunehmend werden Tierverwaltungssysteme ("Ticklab", "Tierbase", "Smartlab", "Pyrat", "Mausoleum", etc.) eingeführt. Diese sind jedoch meist auf den Anforderungen der Forscher implementiert und nicht an die Arbeit in den Tierräumen angepaßt. Die Fa. Galilei Software hat erstmals ein System (Galiei CRS) auf den Markt gebracht, daß auch der käfigorientierten Arbeitsweise in Tierräumen gerecht wird und das Funktionen nur aufgrund der auf der Arbeitsplatte befindlichen Käfigen und der Analyse des Inhalt der Käfige anbietet. Aufgrund dieser Technik wird die Qualität der Daten gesichert und die Dateneingabe kann wesentlich schneller erfolgen. Ebenso erlaubt diese Technik die Automatisierung von käfigbasierten Routineprozessen. Siehe Anmeldung WO 2011/124 209 des Anmelders.

Auch eine Datenbankanwendung ist keine Garantie für die exakte Nachvollziehbarkeit der Transaktionen, weil Daten oft willkürlich eingegeben werden, um einen bestimmten momentanen Inhalt der Käfigkarte zu erzeugen, während die davor liegende Entwicklung aber nicht der Wirklichkeit entspricht. Zumindest kann bei einigen Systemen die davorliegende Entwicklung auf Plausibilität geprüft werden.

Eine weitere Problemstellung besteht in der Abrechnung der Käfige an die belegenden Forschergruppen. Zu diesem Zweck muss im Minimalfall der Beginn der Benutzung des Käfigs und das Ende der Benutzung des Käfigs durch den Forscher gebucht werden ("In Service", "Out of Service").

Zu diesem Zweck können die zu übergebenden Käfige bzw. Käfigkarten außerhalb der Barriere von dem Tierhausmanagement registriert und dem Forscher übergeben werden bzw. bei direkten Tierlieferungen, werden die Käfige direkt an der Wechselstation registriert. Wenn die Tiere den Käfig verlassen bzw. getötet werden, wird der Käfig aus der Software ausgebucht. Die Tage zwischen dem Beginn der Benutzung und dem Ende der Benutzung können rechnerisch ermittelt werden und an den Wissenschaftler weiter berechnet werden.

Da immer wieder Käfige verschwinden, besteht auch das Interesse stichprobenartig festzustellen, ob Käfige zu einem frei wählbaren Zeitpunkt noch physisch vorhanden sind oder nicht (physische Inventur) bzw. man will den Zeitpunkt der letzten Benutzung (Auflösen des Käfigs in der Software, Sollbestand) festzustellen.

Vergleichbare Verhältnisse liegen in der Pflanzenforschung in Pflanzenlaboreinrichtungen vor, in denen ebenfalls Behälter mit Probenmaterial in Regalen vorgehalten werden.

Die Erfindung schildert ein System, welches die Verwechslung von Käfigkartenhaltern und Käfigkarten unmöglich macht, weil es beide Funktionen in einer elektronischen Käfigkarte vereint, welches die Möglichkeit der Käfigkartenarchivierung als Urkunden ermöglich, weil die Bitmaps zum Beschreiben der elektronischen Käfigkarte archiviert werden und welches eine nach Stichtag und Uhrzeit wahlfreie physische Inventur von Käfigen ohne weiteren personellen Aufwand erlaubt, weil die elektronischen Käfigkarten per Infrarotwelle "angepingt" werden können und ihre Antwort das Vorhandensein bestätigt.. Da auf ein Drucksystem bestehend aus Drucker, Papier und Farbband verzichtet werden kann, entfällt auch diese Fehlerquelle. Ebenso erlaubt diese elektronische Käfigkarte das Ablegen mehrerer Käfigkarten oder andere Informationen im Speicher auf den mit einem einfachen Infrarotschlüssel zugegriffen werden kann ohne das ein eigener Computer dazu erforderlich wäre.

### Erfindung 1a: Drucke der Käfigkarten auf Smartlabels an der Wechselstation

Offene Käfigwechselstation, Drucken der SmartLabels (Käfigkarte) auf E-Paper während des Arbeitsprozesses. Die Lösung lässt sich ohne weiteres auch auf in geschlossenen Käfigwechselstation installieren. Hier mit lokalem Infrarotsender.

### Erfindung 1b: Änderung der Käfigkarteninhalte je nach Zustand der Käfige

Z.B. Käfige sind bereit zum Absetzen der Tiere, weil ein bestimmtes Alter erreicht ist. Anzeige von Daten für Experimente z.B. die Tiere in diesem Käfig müssen gewogen werden. Alarmzustände, die dem Forscher mitzuteilen sind, z.B "Tier krank". In diesem Fall müssen die Sender/Receiver an der Decke im Tierraum montiert werden. Das SmartLabel kann über eine zusätzliche (optische und/oder akustische) Signalisierungsvorrichtung verfügen, die Änderungen der Daten oder Alarmzustände anzeigt.

### Erfindung Teil 2a: Adhoc-Prüfung auf Vorhandensein eines Käfigs über SmartRack

Hier kann z.B. der Wissenschaftler prüfen, ob sein Käfig wirklich präsent ist, wenn er den entsprechenden Button auf dem SmartRack druckt.

### Erfindung Teil 2b: Elektronische (physische) Inventur von Rack und Räumen Ausweis einer Inventurdifferenz

Hier handelt es sich um eine Massenprüfung, ob die vermeintlichen Käfige (laut Software) in einem Rack oder in einem Raum sind.

### Erfindung 3: Kombination von Kurz- und Langstreckenkommunikation

Kombination von Technologien für Kurzstrecken- und Langstreckenkommunikation im SmartLabel, indem es für IR-, HF- und/oder UHF-Kommunikation ausgerüstet ist. Kurzstreckenkommunikation z.B. über HF-Technologie mit einer Wechselstation, Langstreckenkommunikation z.B. mit einer stationären Sende- und/oder Empfangsstation an einer Raumdecke. Alternativ zur HF-Technologie kann durch Dämpfen einer UHF-RFID-Antenne eine Kurzstreckenkommunikation aufgebaut werden.

### Erfindung 4: Datenbrille

Die Smartlabels sind teuer, kostengünstigere haben ein kleines Display, das nicht alle Daten wiedergeben kann. Ein separates mobiles Lesegerät (Datensichtgerät, Datenbrille) kann zum Anzeigen aller, auch der nicht auf dem Display angezeigten Daten eines ausgewählten SmartLabels dienen.

Tierraumeinrichtung oder Pflanzenlaboreinrichtung gemäß WO 2011/124 209, geeignet zur Durchführung eines Verfahrens zur Prozessverfolgung von Vorgängen und/oder Leistungen, die wenigstens ein Objekt betreffen, mit einem Regal bzw. einer Käfiganordnung (Rack) mit Behältern bzw. Käfigen, die zumindest ein Objekt enthalten, mit einer Vorrichtung zum Erfassen von Daten der Behälter, mit einer Rechnereinheit mit einer Datenbank zur Aufnahme und Verarbeitung der Daten, mit Identifikationseinrichtungen an jedem Behälter, mit in der Identifikationseinrichtung hinterlegten Daten zum Behälter und zu seinem Inhalt, mit SmartLabels (Etiketten mit elektronischem Papier) als Identifikationseinrichtungen, wobei eine Sende- und (eine) Empfangsvorrichtung, die mit der Rechnereinheit gekoppelt und für eine (Nah- und/oder Fern-) Kommunikation mit den SmartLabels ausgebildet ist (sind).

Zusätzlich kann die obige Einrichtung mit einer Wechselstation ausgestattet sein, wobei die Sende- und (die) Empfangsvorrichtung außerhalb der Wechselstation (in der Einrichtung) stationär angeordnet sind/ist. Zusätzlich kann die Kommunikation zwischen der Sende- und (der) Empfangsvorrichtung und den SmartLabels auf IR- oder HF- oder UHF- oder WLAN-Technologie oder einer Kombination aus den Technologien basieren. Zusätzlich kann ein separates mobiles Lesegerät (Datensichtgerät, Datenbrille) zum Anzeigen aller (nicht nur der angezeigten) Daten einer Identifikationseinrichtung vorgesehen sein. Zusätzlich kann eine Erfassungseinrichtung in der Wechselstation vorgesehen sein, die auf IR- oder HF- oder UHF- oder WLAN-Technologie oder einer Kombination aus den Technologien basiert.

Ein entsprechendes Verfahren zum Betreiben einer Tierraumeinrichtung oder Pflanzenlaboreinrichtung nach WO 2011/124 209 zur Prozessverfolgung von Vorgängen und/oder Leistungen, die wenigstens ein Objekt betreffen, in einer Tierraumeinrichtung oder Pflanzenlaboreinrichtung, mit Regalen zur Aufnahme von Behältern (Käfigen), mit jeweils einer Identifikationseinrichtung an jedem Behälter mit Daten zum Behälter und zu seinem Inhalt, mit einer Rechnereinheit mit einer Datenbank zur Aufnahme und Verarbeitung von Daten der Identifikationseinrichtungen, mit den folgenden Schritten ablaufen:
a) Erfassen (Aufnahme der Daten) einer Identifikationseinrichtung eines Behälters in der Datenbank,
b) (elektronisch-) optische Wiedergabe zumindest eines Teils der Daten auf der Identifikationseinrichtung,
c) Änderung der auf der Identifikationseinrichtung wiedergegebenen Daten in Abhängigkeit von prozessfreien Änderungen des Behälterinhalts (z.B. aufgrund von vordefinierten Routinen der Rechnereinheit).

Zusätzlich kann eine Änderung der Daten in Schritt c) am Identifikationsträger zusätzlich (optisch, akustisch,...) signalisiert werden. Zusätzlich kann zu einem beliebigen Zeitpunkt eine Statusabfrage (Ort, Inhalt) bezüglich eines einzelnen Behälters getätigt und ggf. an einem mobilen oder stationären Bildschirm ausgegeben werden.

Zusätzlich kann zu einem beliebigen Zeitpunkt eine (physische) Inventurabfrage über den Bestand der Behälter in einem Regal oder in mehreren Regalen (z.B. eines Raums) und/oder eine Aktualisierung der Daten (jedenfalls) in der Datenbank getätigt (und an einem Bildschirm ausgegeben) werden. Schließlich kann zusätzlich eine Änderung der Daten auf der Identifikationseinrichtung in Abhängigkeit von auf der Wechselstation erfassten Prozessen (Vorgängen/Leistungen) vorgenommen werden.

Der Aspekt "Positionserkennung von Behältern in einem Regal" ist wie folgt beschrieben:
Die Erfindung schildert ein System, welches die Daten von Käfigen und die physischen Lokationen der Käfige im Rack und deren Slotpositionen im Rack über z.B. eine eindeutige Käfigidentifikationsnummer als optischer Kodierung (z.B. Datamatrixcode, QR-code,...) ohne das Erfordernis einer Käfigkarte (sei sie aus klassischem oder elektronischem Papier), welche die Position explizit anzeigt, erkennt. Dazu wird eine eindeutige Käfigidentifikationsnummer auf einem Adapter zwischen Käfig/ Käfigdeckel und elektronischer Käfigkarte (vgl. Bild L) oder einem Adapter zwischen Käfig/ Käfigdeckel und einem Käfigkartenhalter oder auf dem Käfigkartenhalter, dem Käfig oder dem Käfigdeckel (vgl. Bild A) selbst aufgebracht
Der Vorteil dieses Verfahrens ist, dass Wissenschaftler wie bei den o.g. die Käfigpositionen nun bei der Planung von Tiertransaktionen (z.B. Verpaarungen) die Käfige explizit angeben können und damit Fehler bei der Auswahl der Tiere aufgrund der bisher üblichen reinen textuellen Information (z.B. Stamm, Alter, Geschlecht) vermieden werden können. Der Tierpfleger wird dadurch in seiner Verantwortung wesentlich entlastet. Auch bei Verfahren, die die Käfigposition im Rack (SmartRack) bereits berücksichtigen (siehe WO 2011/124 209) kann nicht sichergestellt werden, dass sich der Käfig tatsächlich in der vorgesehenen Position befindet. Dies kann zwar durch die Anzeige einer Käfigposition auf einer elektronischen Käfigkarte in Verbindung mit ihrer optischen und/oder funkbasierten Erfassung (vgl. die unveröffentlichte Voranmeldung (DE 10 2012 109 320)) sichergestellt werden. Vor allem aber kann mit der vorliegenden Erfindung der kostenintensive Einsatz von elektronischem Papier zur Darstellung des Käfigidentifikationskodes vermieden werden und die komplette Anzeigefläche steht für Tierdaten zur Verfügung. Dadurch ergibt sich auch eine erhebliche Kostenersparnis. Das auf E-Ink (elektronischer Tinte) basierende große Pricer-Label (vgl. Bild D) kostet ca. 60,-- Euro. Das kleinere Label (vgl. Bild K) kostet ca. 15,-- Euro und erfüllt seinen Zweck wie das große Label. Ein weiterer Punkt sind die Reflexionen die auf einem elektronischen Label am Außenglas entstehen können, wenn das Licht ungünstig fällt. Durch die Aufbringung des Codes z.B. auf dem Adapter kann dieses Problem durch die Auswahl eines geeigneten Hintergrunds zum Aufdruck des Codes oder durch ein geeignetes Haftetikett vollständig vermieden werden.
Ein weiterer Vorteil der Erfindung ist, dass die Käfigidentifikationsnummer auch mit herkömmlichen Barcode- oder Datamatrixcodelesern bzw. mit Smartphones an der Wechselstation oder am Rack gelesen und in Arbeitsprozessen verwendet werden kann.

Ein weiterer Vorteil ist, dass SmartLabels mit einem NFC- (Near Field Communication) Chip ausgestattet sind. In diesem Fall kann der Code im NFC- Chip, der einen Identifikationscode für den Käfig enthalten kann, für das Lesen der Käfige an der Wechselstation verwendet werden. In diesem Fall kann sich die Ausstattung des Chips mit einem LF, HF oder UHF Chip erübrigen. Die Ausstattung mit einem LF- oder HF- oder UHF-Transponder ist deshalb unter Umständen erforderlich, damit das Smartrack beim Lesen des Tags an der Wechselstation sofort reagiert. Die marktüblichen Wakeups von Smartlabels betragen bei über Infrarot kommunizierenden Labels in der Regel 1 Sekunde, bei über UHF kommunizierenden Labels ab 8 Sekunden. Diese Zeitspanne ist für flüssiges Arbeiten an der Wechselstation in der Regel zu lang.

Mit Hilfe des NFC-Codes können weiterführende Auskünfte, bei webbasierten Systemen auch auf Webseiten, über die im Käfig sitzenden Tiere auf einem Wiedergabegerät mit einem NFC-Reader abgerufen werden. Dafür können separate Wiedergabegeräte mit einem NFC-Reader zur Verfügung gestellt oder beispielsweise Smartphones verwendet werden. Die meisten Smartphones besitzen heute eine NFC- Reader.
Vorteilhafterweise werden der LF- oder HF- oder UHF-Transponder oder auch ein eigener NFC-Chip auf dem Adapter oder im Adapter oder hinter dem Datamatrixcode angebracht. Denn dort kann er am besten gelesen werden, weil keine Elektronik im Weg ist. Damit lassen sich die Adapter mit den Codes vorher fertigen und dann lediglich die Endgeräte (Käfig und Smartlabel) verbinden. Smartlabels und Käfige können dann im Originalzustand belassen werden.

Idealerweise wird bereits beim Ziehen des Käfigs aus dem Rack der entsprechende Slot in der Käfig-/Tierverwaltungs-Software markiert und geöffnet und beim Zurückstellen die physische Position des Käfigs im Rack in der Software (SmartRack) dargestellt. Durch das das Scannen des optischen Codes, zum Beispiel eines Datamatrixcodes oder QR-Codes, eines Strichcodes, eines Punktemusters oder eines chaotischen Musters, welcher z.B. die Inventarnummer (Käfigidentifikationsnummer) des Käfigs repräsentiert, kann die Position des Käfigs im Rack über Bildanalyse und ein mathematisches Verfahren ermittelt, an eine Software zur Weiterverarbeitung weitergegeben und regelmäßig mit der in der Datenbank vermerkten Rack- und Slotposition jeweils verprobt werden.

Die Lösung stützt sich auf ein Verfahren, ein Computerprogrammprodukt und eine Wechselstation zur Prozessverfolgung, wie sie in der WO 2011/124 209 des Anmelders beschrieben sind. Sie basiert auf der Überlegung, dass der Zustand eines Racks mit seinen gefüllten und ggf. leeren Slots jederzeit optisch, beispielsweise mit einer schwenkbaren Webcam oder Kamera, erfasst und durch Daten- bzw. Bildverarbeitung analysiert werden kann, nachdem das Rack entweder durch die Auswahl in der Software (Rackpositionen im Raum sind hinterlegt) oder durch Lesen des Käfigs an der Wechselstation mit einer optischen Erfassungseinrichtung, z.B. der Kamera, angefahren wurde oder das die Aufzeichnung durch einen Bewegungssensor der auf das Rack gerichteten Kamera gestartet wurde.

Die Bildanalyse und das mathematische Verfahren zur Ermittlung der Slot-Koordinaten kann dabei entweder direkt integriert auf der Erkennungseinheit (z.B. Rasberry PI kombiniert mit Webcam oder Kamera) erfolgen und die Daten (Käfigidentifikationsnummer und Positionsnummer) werden direkt an ein weiterverarbeitendes System (z.B. WO 2011/124 209 oder anderes Tierinformationssystem) übertragen oder die Bildanalyse erfolgt remote auf einem anderen Rechner oder die Bildanalyse erfolgt direkt in einem Browser (www.tagsrepublic.com) und wird anschließend z.B. durch Webservices zur Verfügung gestellt.

Bei sogenannten Rack- Bibliothekssystemen, die zur Einsparung von Platz eingesetzt werden, bei denen die Racks zum Herausziehen der Käfige erst auseinander geschoben werden müssen, kann die Kamera jeweils in dem gegenüberliegenden Rack, aus dem der Käfig entnommen wird, integriert sein. Die Daten- bzw. Bildanalyse kann sowohl nach dem Ziehen des Käfigs leere Slotpositionen in einem Rack feststellen, weil sich die Pixelschar von einem gezogenen Käfig und einem eingeschobenem Käfig im Rack im Rahmen der Bildanalyse deutlich unterscheidet, als auch die nach dem Zurückstellen des Käfigs auf dem Adapter oder dem Käfigdeckel oder der Käfigwanne auf der Frontseite angebrachte Inventarnummer mit Hilfe der entsprechenden Analysetools das Bild analysieren und die Übereinstimmung der Käfigposition im Rack mit den in der Datenbank hinterlegten Angaben überprüfen bzw. aktiv die Positionen der Käfige in der Datenbank verändern..

Der Datamatrixcode kann vorzugsweise auf einen Adapter mit entsprechend nicht reflektierendem Hintergrund aufgebracht werden. Er kann aber auch auf dem Käfigkartenhalter oder auf den Käfig selbst gedruckt oder eingelasert werden. Hier kann die Lesbarkeit zusätzlich verbessert werden, indem der Code mit einer lumineszierenden Substanz (Nanopartikel/-pigmente, vgl. z.B. EP 1736914 A2) aufgebracht wird. In diesem Fall werden zum Beispiel die Pigmente, die den Code darstellen, auf einer Wellenlänge angeregt, reflektieren aber den Code auf einer anderen Wellenlänge.

Mit Bezug auf die unveröffentlichte Voranmeldung des Anmelders (DE 10 2012 109 320) bzw. die beiliegenden Figuren wird weiter beschrieben:

### Figur 1: Auswählen des Racks

Zwei Racks 1, 2, die jeweils 16 Käfige A1, A2...D3, D4 aufnehmen, sind in einem Arbeitsraum positioniert. Jeder Käfig trägt auf seinem Deckel in einem vorderen Bereich einen eingravierten Code mit Inventurdaten zum Käfig. Der Code ist maschinenlesbar. Die Käfigidentifikationsnummern sind in einer Datenbank des Cage Explorers mit Daten zum Inhalt des Käfigs verknüpft oder verknüpfbar. Zusätzlich trägt jeder Käfig einen Kartenhalter bzw. eine Käfigkarte mit denselben und ggf. weiteren Daten zum Käfig und zu seinem Inhalt. Die Daten sind herkömmlich und zusätzlich maschinell auf kurze Distanz z.B. per RFID-Technik (LF, HF, NCF, gedämpfte UHF Antennen) oder optischer Erkennung lesbar.

Die beiden Racks 1, 2 sind samt ihren Positionen A, B in einer auf einem Computer 3 installierten und Datenbank-basierten Software erfasst, dem Cage Explorer bzw. SmartRack©. Im Arbeitsraum ist eine Webcam 4 installiert, die die beiden Racks 1, 2 insgesamt und jeden einzelnen Käfig A1, A2...D3, D4 im Rack 1, 2 erfassen kann. Die Webcam 4 erlaubt das Hinterlegen von Positionen A, B bzw. das Anfahren von bestimmten Positionen A oder B im Arbeitsraum durch eine Software-API (Application Programming Interface bzw. Programmierschnittstelle).

### a) Auswahl im Cage Explorer

Ein Benutzer will die Käfige B2, D3 und D4 aus dem Rack 1 an einer Wechselstation 5 bearbeiten. Dazu wählt er per Cage Explorer das Rack 1 aus Die Software übergibt die Position A des Racks 1 im Raum unmittelbar an die Webcam 4 kabelgebunden oder via WLAN, und die Webcam 4 fährt die Position A an und macht ein Bild des Racks. Der Benutzer entnimmt die Käfige B2, D3 und D4 aus dem Rack 1. Die Webcam macht weitere Bilder und erfasst das Rack 1 insgesamt sowie jeden Ort bzw. Slot jedes einzelnen Käfigs A1, A2... D3, D4. Das Bildanalyseprogramm analysiert, dass die Slots der Käfige B2, D3 und D4 leer sind (vgl. Figur 2), und leitet diese Information an den Cage Explorer weiter. Der Cage Explorer "öffnet" die Käfige B2, D3 und D4 auf der Software-Ebene.

Der Vorteil dieses Verfahrens gegenüber der folgenden Variante b) ist, dass der Benutzer die Käfige B2, D3 und D4 im Cage Explorer bereits geöffnet vorfindet, wenn er mit den Käfigen B2, D3 und D4 an der Wechselstation 5 ankommt. Dort kann er sie zusätzlich mittels der RFID auf dem Käfigkartenhalter oder der Käfigkarte selbst verproben, indem die Informationen der Webcam 4 über die leeren Orte der Käfige B2, D3 und D4 im Rack 1 mit den Daten aus der RFID-Erfassung der Käfige B2, D3 und D4 an der Wechselstation 5 abgeglichen werden. Statt RFID ist auch ein Verfahren mit Barcode möglich.

Damit ist ein zweistufiges Verfahren möglich, nämlich das manuelle Markieren im Computer 3 einerseits und die Gegenprobe bezüglich der korrekten Auswahl der Käfige B2, D3 und D4 beim Eintreffen an der Wechselstation 5 mittels RFID und der in der Datenbank gespeicherten Information andererseits.

### b) Auswahl durch ausschließliches Lesen der RFID oder des Barcodes des Käfigs an der Wechselstation

Ein Benutzer will die Käfige B2, D3 und D4 aus dem Rack 1 an einer Wechselstation 5 bearbeiten. Dazu entnimmt er die Käfige B2, D3 und D4 aus dem Rack 1, in diesem Fall aber ohne vorherige Eingabe am Computer 3. Er kommt mit den Käfigen B2, D3 und D4 an der Wechselstation 5 an. Hier werden die RFID-/Barcodedaten der Käfige B2, D3 und D4 erfasst. Die Positionierung der Webcam 4 und die Bildanalyse ihrer Aufnahmen finden erst statt, wenn die RFID-Daten der Käfige B2, D3 und D4 an der Wechselstation 5 gelesen wurden. Die Daten werden daraufhin mit den Aufnahmen der Webcam 4 abgeglichen.

### Figur 2: Ziehen der Käfige

Die Aufzeichnung durch die Webcam 4 startet, wenn sie nicht softwaregesteuert stattfindet z.B. durch Auswahl des Racks in der Software, sobald sich der Benutzer vor dem Rack 1 bewegt, und endet, wenn keine Bewegungen mehr stattfinden. Das letzte Bild der Webcam 4 wird auf offene Slots hin analysiert. Die offenen Slotpositionen werden in Form von Koordinaten an das SmartRack© übergeben. Das SmartRack© öffnet den jeweiligen Käfig B2, D3 und D4. Durch Lesen der RFID oder des Barcodes an der Wechselstation 5 wird die Position zusätzlich verprobt, indem die Daten der RFID oder des Barcodes mit den hinterlegten Daten des Cage Explorer verglichen werden.

### Figur 3: Zurückstellen der Käfige

Nachdem die Tiertransaktionen auf der Wechselstation 5 durchgeführt wurden, werden nach der Veränderung der Inhalte der Käfige B2, D3 und D4 die Käfigkarten inklusive ihrer Positionen neu ausgedruckt. Unter Umstände werden am SmartRack© für die gezogenen Käfige B2, D3 und D4 auch veränderte Käfigpositionen am SmartRack© erfasst. Der Benutzer bringt die Käfige B2, D3 und D4 an die auf den Käfigkarten ausgedruckten Positionen zurück.

Die Aufzeichnung durch die Webcam 4 startet, wenn sie nicht softwaregesteuert stattfindet, z.B. durch Auswahl des Racks, in der Software, sobald sich der Benutzer vor dem Rack 1 bewegt und endet, wenn keine Bewegungen mehr stattfinden. Durch die Erfassung des tatsächlichen Orts des zurückgestellten Käfigs und seines Codes und dem Vergleich mit den entsprechenden Daten der Datenbank des Cage wird jeder Käfig B2, D3 und D4 visuell verprobt.

Bei falscher Positionierung eines der Käfige B2, D3 oder D4 im Rack 1 wird ein Warnhinweis am Computer 3 ausgeben.

Die Erfindung lässt sich auch beschreiben als Tierraumeinrichtung oder Pflanzenlaboreinrichtung, insbesondere gemäß WO 2011/124 209, geeignet zur Durchführung eines Verfahrens zur Prozessverfolgung von Vorgängen und/oder Leistungen, die wenigstens ein Objekt betreffen, mit einem Regal bzw. einer Käfiganordnung (Rack) mit Behältern (Käfigen), die zumindest ein Objekt enthalten, mit einer Vorrichtung zum Erfassen von Daten der Behälter, mit einer Rechnereinheit mit einer Datenbank zur Aufnahme und Verarbeitung der Daten, gekennzeichnet durch einen individuellen Code am Behälter und außerhalb einer Käfigkarte oder einer Anzeige eines SmartLabels (Etiketten mit elektronischem Papier), der vom im Rack abgestellten Behälter herunter herkömmlich und/oder maschinenlesbar ist.

Zusätzlich kann die Einrichtung einen Behälter und/oder einen Kartenhalter und/oder einen Adapter zur Befestigung des Kartenhalters am Behälter und/oder ein Gehäuse eines SmartLabels und/oder ein Inlay zur Befestigung am Behälter, am Kartenhalter, am Adapter und/oder am Gehäuse des SmartLabels, der bzw. das den Code trägt, umfassen.

Die Erfindung betrifft außerdem einen Behälter und/oder Kartenhalter und/oder Adapter zur Befestigung des Kartenhalters am Behälter und/oder Gehäuse eines SmartLabels und/oder Inlay zur Befestigung am Behälter, am Kartenhalter, am Adapter und/oder am Gehäuse des SmartLabels, der bzw. das einen individuellen Code trägt, der herkömmlich und/oder maschinenlesbar ist, insbesondere für die Verwendung in einer Tierraumeinrichtung oder Pflanzenlaboreinrichtung.

Die Erfindung betrifft schließlich ein Verfahren zum Betreiben einer Tierraumeinrichtung oder Pflanzenlaboreinrichtung, insbesondere nach WO 2011/124 209, zur Prozessverfolgung von Vorgängen und/oder Leistungen, die wenigstens ein Objekt betreffen, in einer Tierraumeinrichtung oder Pflanzenlaboreinrichtung, mit Regalen zur Aufnahme von Behältern (Käfigen), mit einer Rechnereinheit mit einer Datenbank zur Aufnahme und Verarbeitung von Daten betreffend die Behälter und ihren Inhalt, mit den folgenden Schritten:
a) Erfassen eines individuellen Codes am Behälter und außerhalb einer Käfigkarte oder einer Anzeige eines SmartLabels (Etiketten mit elektronischem Papier) in der Datenbank,
b) Zuordnen von Daten des Behälters und/oder seines Inhalts zum Code,
c) Änderung der auf der dem Code zugeordneten Daten in Abhängigkeit von (prozessfreien oder prozessbedingten) Änderungen des Behälterinhalts,
d) Abrufen der Daten durch Erfassen des ihnen zugeordneten Codes,
wobei die Schritte c) und d) jederzeit separat und unabhängig voneinander durchführbar sind.

Die zugehörigen Zeichnungen zeigen einen Datamatrixcode auf einem Käfig mit Laserwriter, einen Datamatrixcode auf Käfigschloss mit Laserwriter, Datamatrixcode-Decodierung mit webcam, z.B. http://www.tagsrepublic.com/), einen Datamatrixcode auf Smartlabel, eine Interpretation bzw. Entschlüsselung des Datamatrixcodes, die Rückseite eines kleineren Smartlabels, Rückseite eines Käfigkartenhalters, Käfigdeckel mit Aussparungen für die Befestigung des Käfigkartenhalters, Rückseite eines kleineren Smartlabels, Rückseite eines Käfigkartenhalters, Käfigdeckel mit Aussparungen für die Befestigung des Käfigkartenhalters, Smartlabels mit Code im Display und außerhalb des Displays.

**Bezugszeichenliste**

| | | | |
|---|---|---|---|
| 1,2 | Rack | 200 | Käfigkartenhalter |
| 3 | Computer | 202 | Erstreckungsebene |
| 4 | Webcam | 210 | Befestigungsabschnitt |
| 5 | Wechselstation | | |
| 6 | Befehl "Kamera steuern" | | |
| 7, 8 | Verarbeitungsprozess | 212 | Befestigungsnasen |
| 11 | Smartlabelhalter | 250 | Behälter |
| 12 | Basis | 252 | Deckel |
| 110 | Unterschiene | 254 | Vorderseite |
| 112 | Oberschiene | 256 | Aussparung |
| 114 | V-Nut | | |
| 116 | U-Nut | | |
| 118 | Halterebene | | |
| 120 | Chiphalter | | |
| 122 | unterer Abschnitt | | |
| 124 | oberer Abschnitt | | |
| 126 | Aufnahmeschlitz | | |
| 128 | Ansichtsfläche | | |
| 130 | Fenster | | |
| 132 | Widerlager | | |
| 134 | Käfigadapter | | |
| 136 | Oberkante | | |
| 138 | Unterkante | | |
| 140 | Spalt | | |
| 142, 144 | Schmalseite | | |
| 146 | Zwischenraum | | |
| 150 | Smartlabel | | |
| 152 | Gehäuse | | |
| 154 | Vorderseite | | |
| 156 | Display | | |
| 158 | Infrarotsender/-empfänger | | |
| 160 | Feld | | |
| 162 | obere Feder | | |
| 164 | linke Stirnfläche | | |
| 166 | Öffnung | | |
| 168 | untere Feder | | |
| 180 | Datamatrixcode | | |
| 190 | Aussparung | | |
| 192 | Anschluss | | |

## Patentansprüche

1. Vorrichtung, insbesondere für eine Tierraumeinrichtung oder eine Pflanzenlaboreinrichtung, eine Lagerhalle oder dergleichen, die geeignet ist zur Durchführung eines Verfahrens zur Organisation wenigstens eines Objekts,
- mit einem Regal bzw. einer Käfiganordnung (1; 2) mit einer Bedienungsseite,
- mit Behältern bzw. Käfigen (A1...D4; 250), die leer sind oder zumindest ein Objekt enthalten und eine Positionsmarkierung (11, 150; 180) umfassen,
- mit einer Vorrichtung zum optischen Erfassen (Erfassungseinrichtung) (4) des gesamten Regals (1; 2) und der einzelnen Behälter (A1...D4; 250) im Regal (1; 2) und der Positionsmarkierungen (11, 150; 180),
- wobei die Erfassungseinrichtung (4) dazu eingerichtet und ausgebildet ist, den Ort eines Behälters (A1...D4; 250) oder mehrerer Behälter (A1...D4; 250) im Regal (1; 2) und deren Positionsmarkierung (11, 150; 180) optisch zu erfassen, und die unabhängig vom Regal (1; 2) in einem Raum angebracht ist, in dem sich das Regal (1; 2) oder mehrere Regale (1; 2) befinden,
- mit einer Rechnereinheit (3) zum Speichern und Verarbeiten von Daten,
- mit einer Vergleichs- bzw. Analyseeinheit, in der die Daten mit hinterlegten Daten verglichen bzw. analysiert werden können,
- und mit einer Signalvorrichtung zur Ausgabe eines Warnsignals bei Auftreten einer Abweichung.

2. Vorrichtung nach Anspruch 1, **gekennzeichnet durch** eine 3D-Kamera, die den Behälter (A1...D4; 250) und dessen Inhalt erfasst.

3. Vorrichtung nach Anspruch 1 oder 2, mit zumindest einer der folgenden Einrichtungen:
- einer Einschaltvorrichtung zur Aktivierung der Vorrichtung,
- einer Umwandlungseinheit, die die erfassten Daten in elektronisch verarbeitbare Daten umwandelt,
- einer Datenschnittstelle zur Weiterleitung der Daten an eine Rechnereinheit (3).

4. Vorrichtung nach Anspruch 3 mit einer Sende- und Empfangsvorrichtung (158), die mit einer Rechnereinheit (3) gekoppelt ist, **gekennzeichnet durch** ein Smartlabel (150) am Behälter (250) als Identifikationseinrichtung, und **dadurch gekennzeichnet, dass** das Smartlabel (150) einen Sender aufweist, und die Sende- und Empfangsvorrichtung für eine Kommunikation mit dem Smartlabel (150) ausgebildet ist.

5. Vorrichtung nach Anspruch 4, **gekennzeichnet durch** eine Sende- und Empfangsvorrichtung in der Wechselstation (5) zur Erfassung des Smartlabels.

6. Vorrichtung nach einem der Ansprüche 4 oder 5, **gekennzeichnet durch** ein separates mobiles Lesegerät zum Anzeigen einer Auswahl der Daten des Smartlabels (150).

7. Vorrichtung nach einem der obigen Ansprüche, **gekennzeichnet durch** einen individuellen Code (180) an jedem Behälter (A1... D4; 250) außerhalb einer Käfigkarte oder außerhalb einer Anzeige eines Smartlabels (150), der herkömmlich und/oder durch die Erfassungseinrichtung (4) maschinenlesbar ist.

8. Vorrichtung nach dem obigen Anspruch, **dadurch gekennzeichnet, dass** der Code (180) dauerhaft oder reversibel am Behälter (A1 ... D4; 250) angebracht ist.

9. Verfahren zur Prozessverfolgung von Vorgängen und/oder Leistungen, die wenigstens ein Objekt betreffen, insbesondere in einer Tierraumeinrichtung oder Pflanzenlaboreinrichtung mit einem Regal und darin angeordneten Behältern, die eine Positionsmarkierung umfassen, welche Behälter leer sind oder ein Objekt oder mehrere Objekte enthalten, und mit einer Datenbank enthaltend Daten zu den Behältern bzw. zu ihrem Inhalt, insbesondere in einer Vorrichtung nach einem der Ansprüche 1 bis 8, mit den folgenden Schritten:
a) Aktivieren einer Erfassungseinrichtung zum (automatisierten) selbsttätigen Erfassen von Behältern im Regal,
b) Erfassen der Behälteranordnung eines vollständigen Regals mit allen Behältern oder eines Abschnitts oder Ausschnitts des Regals oder jeden einzelnen Behälter und deren Positionsmarkierung,
c) Vergleich der Daten der Erfassung mit in der Datenbank eingegebenen Daten,
d) Ausgabe einer Warnung oder Update bei einer Abweichung der miteinander verglichenen Daten.

10. Verfahren nach dem obigen Verfahrensanspruch, **dadurch gekennzeichnet, dass** es während oder nach Abschluss eines Prozesses von Vorgängen und/oder Leistungen durchgeführt wird.

11. Verfahren nach einem der obigen Verfahrensansprüche, **dadurch gekennzeichnet, dass** das Aktivieren in Schritt a) durch eine Benutzereingabe oder durch einen Erfassungsvorgang eines Behälters an der Wechselstation oder durch die Erfassung einer Bewegung an der Käfiganordnung in Schritt b) erfolgt.

12. Verfahren nach einem der obigen Verfahrensansprüche, **dadurch gekennzeichnet, dass** die auf einer Identifikationseinrichtung der Behälter wiedergegebenen Daten in Abhängigkeit von auf der Wechselstation erfassten Prozessen bzw. Änderungen des Behälterinhalts geändert werden.

13. Verfahren nach Anspruch 12, **gekennzeichnet durch** eine elektronische Änderung der Anzeige der Identifikationseinrichtung.

14. Verfahren nach Anspruch 13, **dadurch gekennzeichnet, dass** Bilddateien in einem dokumentenechten digitalen Archiv abgespeichert werden.

15. Verfahren nach Anspruch 9 bis 11 oder Anspruch 12 bis 14, **dadurch gekennzeichnet, dass** eine Inventurabfrage entweder über eine Erfassung der Behälter oder eines Regals oder mehrerer Regale oder über eine Erfassung der Identifikationseinrichtungen und ihrer Daten erfolgt.

## Claims

1. A device, in particular for an animal space facility or a plant laboratory facility, a warehouse or the like, which is suitable for performing a method for the organisation of at least one object,
- with a rack or a cage arrangement (1; 2) with an operating side,
- with containers or cages (A1... D4; 250), which are empty or contain at least one object (11; 150; 180) and which comprise a positional marking (11, 150; 180),
- with a device for optical recording (recording means) (4) of the complete rack (1; 2) and the single containers (A1... D4; 250) in the rack (1; 2) and the positional markings (11, 150; 180),
- wherein the recording means (4) is adapted and configured to optically record the location of one or more containers (A1 ... D4; 250) in the rack (1; 2) and their positional markings (11, 150; 180), and being independently mounted from the rack in the room, in which the rack (1; 2) or several racks (1; 2) are located,
- with a computer unit for storing and processing data,
- with a comparison or analysis unit, in which data can be compared or analysed with stored data,
- and with a signalling device for emitting a warning signal in case of a discrepancy occurring.

2. The device according to claim 1, **characterised by** a 3D camera which records the container (A1x...D4; 250) and its content.

3. The device according to claims 1 to 2, with at least one of the following means:
- a switch-on device for activating the device,
- a conversion unit, which converts the recorded data into electronically processable data,
- a data interface for passing the data to a computer unit (3),

4. The device according to claims 3, with a transmitter and the recording (158), coupled with a computer unit (3), **characterised in** a Smartlabel (150) on the container (250) as an identification means, and **characterised in that** the Smartlabel (150) comprises a sending device, and the transmitting and receiving device is configured for communication with the Smartlabel.

5. The device according to claim 4, **characterised by** a transmitting and receiving device at the changing station for recording the Smartlabel.

6. The device according to one of claims 4 to 5, **characterised by** a separate mobile reader for displaying a selection of data of the Smartlabels (150).

7. The device according to one of the above claims, **characterised by** an individual code (180) on each container (A1 ... D4; 250) outside the cage card or outside a display of a Smartlabel(150), which code is machine-readable either in a conventional manner and/or by the recording means (4).

8. The device according to the above claim, **characterised in that** the code (180) is permanently or reversibly attached to the container.

9. A method for process tracking of operations and/or services relating to at least one object, in particular in an animal space facility or plant laboratory facility with a rack and containers arranged therein, comprising a positional marking, which containers may be empty or contain one or more objects, and with a database containing data relating to the containers or their content, in particular in a device according to claims 1 to 8, comprising the following steps:
a) activating a recording means for (automated) automatically recording containers in the rack,
b) recording the container arrangement of a complete rack with all containers or a section or a portion of the rack or each individual container and its positional marking,
c) comparing the data of the recording with data input into the database,
d) emitting a warning or update in case of a discrepancy of the compared data.

10. The method according to the above method claim, **characterised in that** it is performed during or after completion of a process of operations and/or services.

11. The method according to one of the above process claims, **characterised in that** the activation in step a) is effected by a user entry or by a recording operation of a container at the changing station or by recording a movement at the cage arrangement in step b).

12. The method according to one of the above process claims, **characterised in that** the data reproduced on an identification means of the containers are altered in dependence of processes recorded at the changing station or changes to the container content.

13. The method according to claim 12, **characterised by** an electronical change of the display of the identification means.

14. The method according to claim 13 **characterised in that** the image files are stored in a document-genuine digital archive.

15. The method according to claim 9 to 11 or 12 to 14 **characterised in that** a inventory query is performed either by recording of the containers or the rack or several racks or by recording the idenfication means and their data.

## Revendications

1. Dispositif, en particulier destiné à un système d'animalerie ou à un système de laboratoire végétal, un hangar de stockage ou similaire, qui est apte la réalisation d'un procédé d'organisation d'au moins un objet, comportant
- une étagère ou un système de cage (1 ; 2) doté d'un côté d'utilisation,
- des récipients ou des cages (A1... D4, 250) qui sont vides ou contiennent au moins un objet et un marquage de position (11, 150 ; 180),
- un dispositif de détection optique (dispositif de détection) (4) de l'ensemble de l'étagère (1 ; 2) et des récipients individuels (A1... D4, 250) dans l'étagère (1 ; 2) et des marquages de positionnement (11,150 ; 180),
- le dispositif de détection (4) étant aménagé et conçu pour détecter optiquement la localisation d'un récipient (A1... D4, 250) ou de plusieurs récipients (A1... D4, 250) dans l'étagère et leur marquage de position (11, 150 ; 180), et qui est installé indépendamment de l'étagère (1 ; 2) dans un espace dans lequel se trouvent l'étagère (1 ; 2) ou plusieurs étagères (1 ; 2),
- une unité de calcul (3) pour la sauvegarde et le traitement des données,
- une unité de comparaison ou d'analyse dans laquelle les données peuvent être comparées avec les données enregistrées ou analysées,
- un dispositif de signalisation pour l'émission d'un signal d'alarme en cas de survenance d'un écart.

2. Dispositif selon la revendication 1, **caractérisé par** une caméra 3D qui détecte le récipient (A1... D4, 250) et son contenu.

3. Dispositif selon la revendication 1 ou 2, comportant au moins un des systèmes suivants :
- un dispositif d'activation pour activer le dispositif,
- une unité de conversion qui convertit les données détectées en données pouvant être traitées par système électronique,
- une interface de données pour la retransmission des données à une unité de calcul (3).

4. Dispositif selon la revendication 3, comportant un dispositif d'envoi et de réception (158) qui est couplé à une unité de calcul (3), **caractérisé par** une smart label (étiquette intelligente) (150) apposée sur le récipient (250) comme système d'identification, et **caractérisé en ce que** la smart label (150) présente un émetteur et que le dispositif d'envoi et de réception est conçu pour une communication avec la smart label (150).

5. Dispositif selon la revendication 4, **caractérisé par caractérisé par** un dispositif d'envoi et de réception dans la station d'échange (5) pour détecter la smart label.

6. Dispositif selon une des revendications 4 ou 5, **caractérisé par caractérisé par** un lecteur mobile séparé pour l'affichage d'une sélection des données de la smart label (150).

7. Dispositif selon une des revendications précédentes, **caractérisé par** un code individuel (180) apposé sur chaque récipient (A1... D4, 250) en dehors d'une carte de cage ou en dehors d'un affichage d'une smart label (150) qui est lisible mécaniquement traditionnellement et/ou par le dispositif de détection (4).

8. Dispositif selon la revendication précédente, **caractérisé en ce que** le code (180) est apposé de manière permanente ou réversible sur le récipient (A1... D4, 250).

9. Procédé de suivi de traitement d'opérations et/ou de prestations qui concerne au moins un objet, en particulier dans un système d'animalerie ou un système de laboratoire végétal, comportant une étagère et des récipients disposés dedans qui comprennent un marquage de position, lesquels récipients sont vides ou contiennent un ou plusieurs objets, et une banque de données contenant des données concernant les récipients ou leur contenu, en particulier dans un dispositif selon une des revendications 1 à 8, comportant les étapes suivantes :
a) activation d'un système de détection pour l'enregistrement automatique (automatisé) de récipients dans l'étagère,
b) détection de l'agencement des récipients d'une étagère complète comportant tous les récipients ou d'une section ou de sections de l'étagère ou de chaque récipient individuel et de leur marquage de position du paiement à,
c) comparaison des données de la détection avec les données saisies dans la banque de données,
d) édition d'un avertissement ou d'une mise à jour en cas d'écart entre les données comparées entre elles.

10. Dispositif selon la revendication précédente, **caractérisé en ce qu'**il est réalisé pendant ou après la fin d'un processus d'opérations et/ou de prestations.

11. Dispositif selon une des revendications précédentes, **caractérisé en ce que** l'activation se fait dans l'étape a) par une saisie d'utilisateur ou par une opération d'enregistrement des récipients au niveau de la station d'échange ou par l'enregistrement d'un mouvement au niveau du système de cage pendant l'étape b).

12. Procédé selon une des revendications de procédé précédentes, **caractérisé en ce que** les données indiquées sur un système d'identification des récipients sont modifiées en fonction d'opérations ou de modifications du contenu du récipient détectées sur la station d'échange.

13. Procédé suivant la revendication 12, **caractérisé par** une modification électronique de l'affichage du dispositif d'identification.

14. Procédé selon la revendication 13, **caractérisé en ce que** des données d'image sont archivées dans des archives numériques conformes aux documents.

15. Procédé selon les revendications 9 à 11 ou les revendications 12 à 14, **caractérisé en ce qu'**une consultation d'inventaire se fait soit par une détection des récipients ou d'une étagère ou de plusieurs étagères, soit par une détection des dispositifs d'identification et de leurs données.
